# EUROPEAN PATENT APPLICATION

(11) **EP 4 738 522 A1**
(43) Date of publication of application: **06.05.2026**
(21) Application number: 24831465.0
(22) Date of filing: 17.05.2024
(51) Int. Cl.: H01M 10/0585

(54) **BATTERY AND BATTERY MANUFACTURING METHOD**

(30) Priority: 28.06.2023 JP 2023106267
(71) Applicant: Panasonic Intellectual Property Management Co., Ltd., Kadoma-shi, Osaka 571-0057 (JP)
(72) Inventor: KOSHIZUKA, Tsutomu, Kadoma-shi, Osaka 571-0057 (JP); KAWASE, Akira, Kadoma-shi, Osaka 571-0057 (JP); HONDA, Kazuyoshi, Kadoma-shi, Osaka 571-0057 (JP); MORIOKA, Kazuhiro, Kadoma-shi, Osaka 571-0057 (JP)
(74) Representative: Novagraaf International SA
(86) International application number: PCT/JP2024/018297
(87) International publication number: WO 2025/004593

(57) **Abstract**

A battery (1) includes a unit cell (60) including: an electrode current collector(10); an electrode active material layer (20) disposed on a main surface of the electrode current collector (10); a solid electrolyte layer (30) disposed on a side of the electrode active material layer (20) opposite from the electrode current collector (10); a counter electrode active material layer (40) disposed on a side of the solid electrolyte layer (30) opposite from the electrode active material layer (20); and a counter electrode current collector (50) disposed on a side of the counter electrode active material layer (40) opposite from the solid electrolyte layer (30). A first region (71) not covered with the electrode active material layer (20) is provided at an end portion of the main surface (11) of the electrode current collector (10) in a first direction. A second region (72) not covered with the solid electrolyte layer (30) in a plan view is provided at an end portion of the electrode active material layer (20) in the first direction. A third region (73) not covered with the counter electrode active material layer (40) in the plan view is provided at an end portion of the solid electrolyte layer (30) in the first direction.

## Description

### [Technical Field]

The present disclosure relates to batteries and battery manufacturing methods.

### [Background Art]

Patent Literature (PTL) 1 describes a battery in which an electrode current collector, an electrode active material layer, a solid electrolyte layer, a counter electrode active material layer, and a counter electrode current collector are stacked.

PTL 2 describes a battery in which an electrode current collector, an electrode active material layer, a solid electrolyte layer, a counter electrode active material layer, and a counter electrode current collector are stacked. In addition, in the battery described in PTL 2, non-opposed sites are provided at the end portions of the electrode active material layer and the solid electrolyte layer.

PTL 3 describes a battery in which an electrode current collector, an electrode active material layer, a solid electrolyte layer, a counter electrode active material layer, and a counter electrode current collector are stacked. In addition, in the battery described in PTL 3, steps are provided in the electrode active material layer and the counter electrode active material layer, and an insulating layer is disposed on the counter electrode current collector.

### [Citation List]

### [Patent Literature]

[PTL 1] Japanese Unexamined Patent Application Publication No. 2019-140079
[PTL 2] Japanese Unexamined Patent Application Publication No. 2020-129519
[PTL 3] Japanese Unexamined Patent Application Publication No. 2022-104137

### [Summary of Invention]

### [Technical Problem]

In the prior art, there is a demand for improved battery reliability. Therefore, it is an object of the present disclosure to provide a highly reliable battery or the like.

### [Solution to Problem]

A battery according to one aspect of the present disclosure includes: a unit cell including: an electrode current collector; an electrode active material layer disposed on a main surface of the electrode current collector; an electrolyte layer disposed on a side of the electrode active material layer opposite from the electrode current collector; a counter electrode active material layer disposed on a side of the electrolyte layer opposite from the electrode active material layer; and a counter electrode current collector disposed on a side of the counter electrode active material layer opposite from the electrolyte layer, wherein a first region not covered with the electrode active material layer is provided at an end portion of the main surface of the electrode current collector in a first direction that is a direction from a center of the main surface towards an outer edge of the main surface of the electrode current collector, a second region not covered with the electrolyte layer in a plan view of the main surface of the electrode current collector is provided at an end portion of the electrode active material layer in the first direction, and a third region not covered with the counter electrode active material layer in the plan view is provided at an end portion of the electrolyte layer in the first direction.

A battery manufacturing method according to one aspect of the present disclosure includes: stacking a plurality of counter electrode current collectors and a plurality of stacked electrode plates including an electrode current collector, an electrode active material layer, an electrolyte layer, and a counter electrode active material layer to cause the plurality of counter electrode current collectors to be stacked on a side of the counter electrode active material layer opposite from the electrolyte layer, the electrode active material layer being disposed on a main surface of the electrode current collector, the electrolyte layer being disposed on a side of the electrode active material layer opposite from the electrode current collector, the counter electrode active material layer being disposed on a side of the electrolyte layer opposite from the electrode active material layer; and pressing the plurality of stacked electrode plates and the plurality of counter electrode current collectors collectively after the stacking.

### [Advantageous Effects of Invention]

According to the present disclosure, it is possible to provide a highly reliable battery or the like.

### [Brief Description of Drawings]

[FIG. 1]

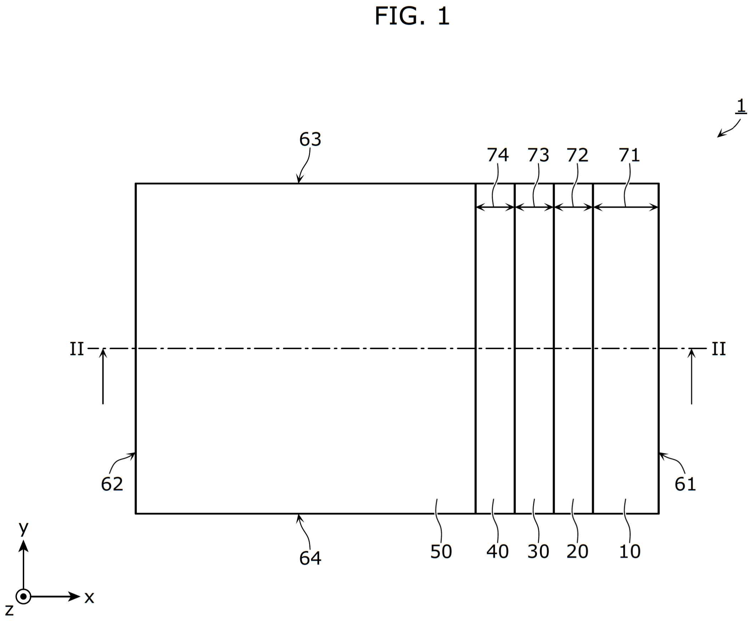

   FIG. 1 is a top view of a battery according to Embodiment 1.
[FIG. 2]

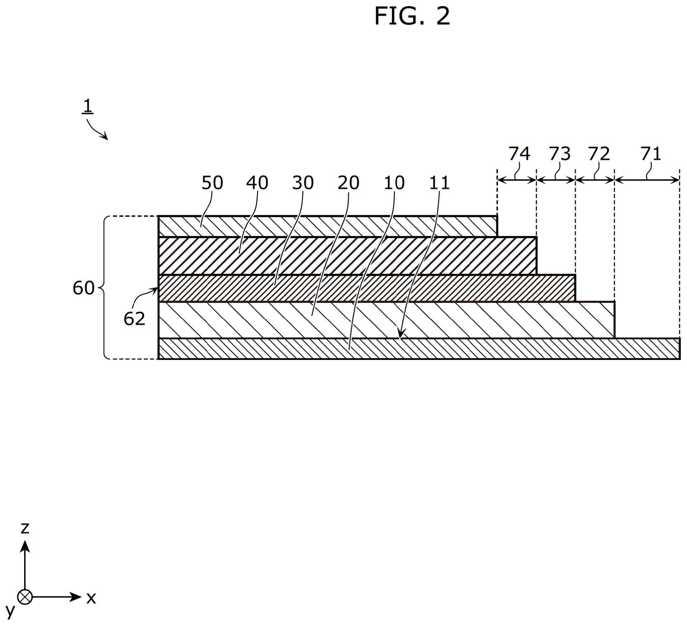

   FIG. 2 is a cross-sectional view of a battery according to Embodiment 1.
[FIG. 3]

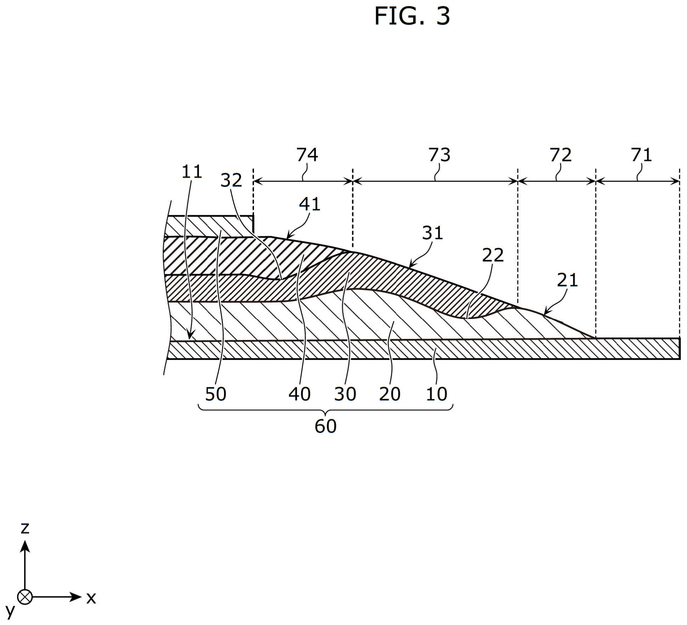

   FIG. 3 is a cross-sectional view illustrating another example of the structure of the end portion of the unit cell according to Embodiment 1.
[FIG. 4]

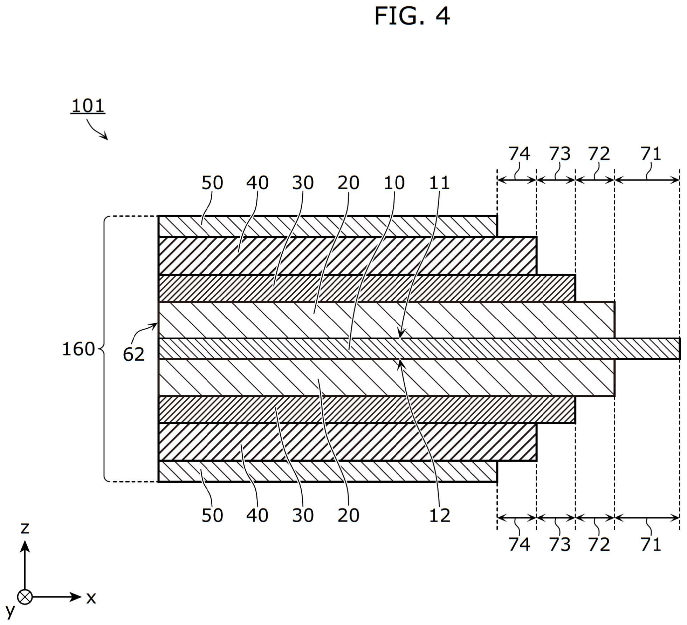

   FIG. 4 is a cross-sectional view of a battery according to Variation 1 of Embodiment 1.
[FIG. 5]

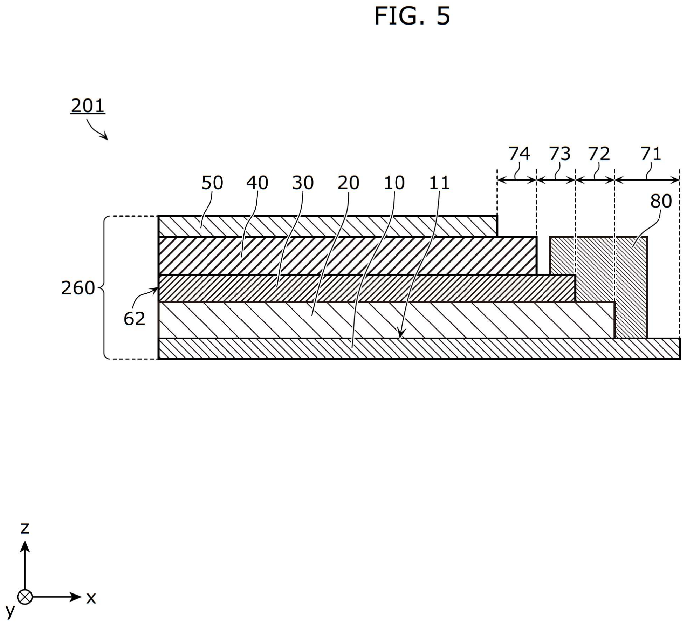

   FIG. 5 is a cross-sectional view of a battery according to Variation 2 of Embodiment 1.
[FIG. 6]

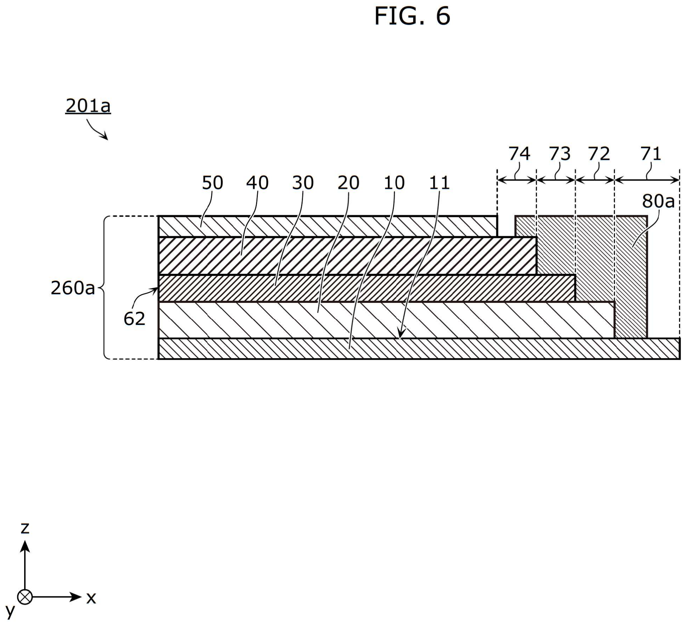

   FIG. 6 is a cross-sectional view of another battery according to Variation 2 of Embodiment 1.
[FIG. 7]

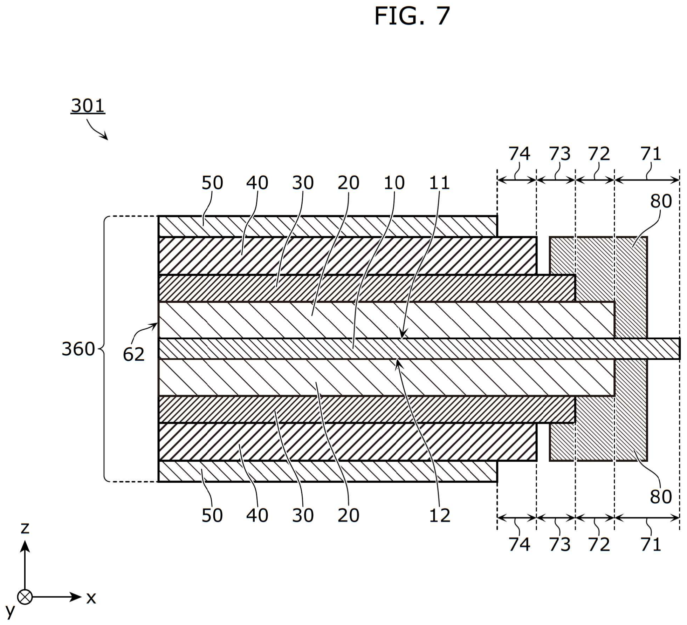

   FIG. 7 is a cross-sectional view of a battery according to Variation 3 of Embodiment 1.
[FIG. 8]

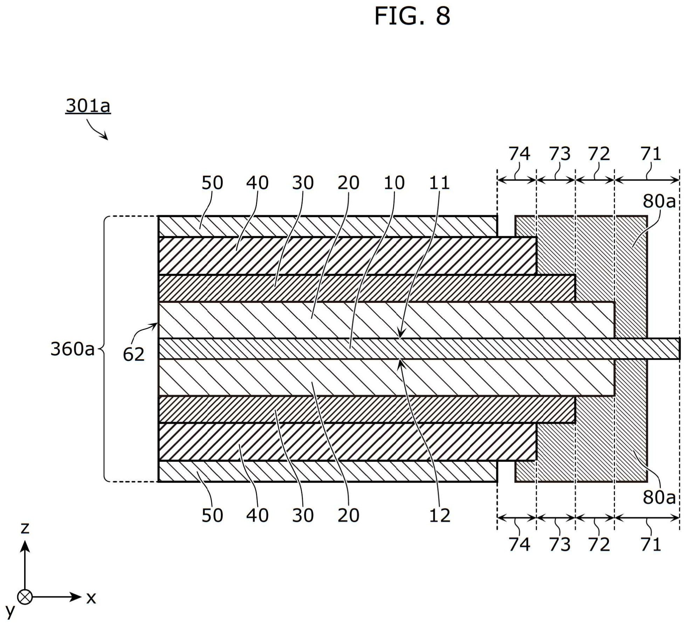

   FIG. 8 is a cross-sectional view of another battery according to Variation 3 of Embodiment 1.
[FIG. 9]

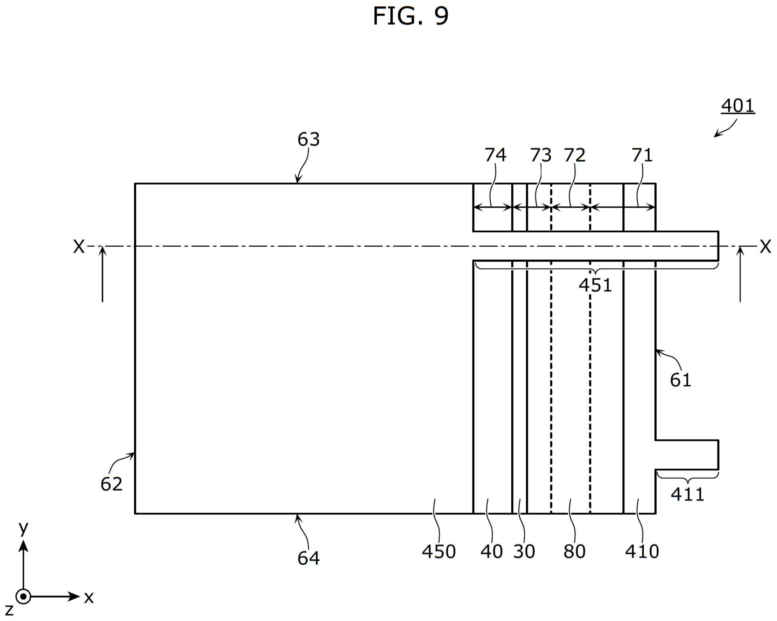

   FIG. 9 is a top view of a battery according to Variation 4 of Embodiment 1.
[FIG. 10]

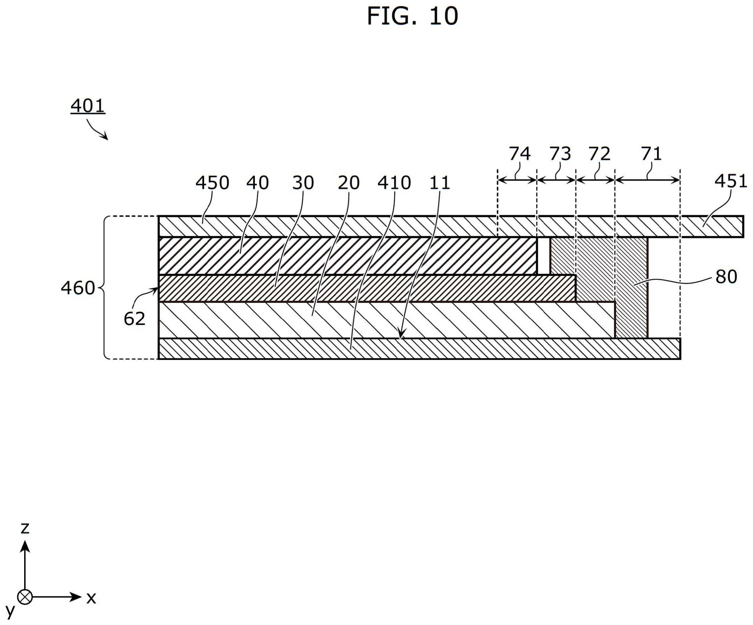

   FIG. 10 is a cross-sectional view of a battery according to Variation 4 of Embodiment 1.
[FIG. 11]

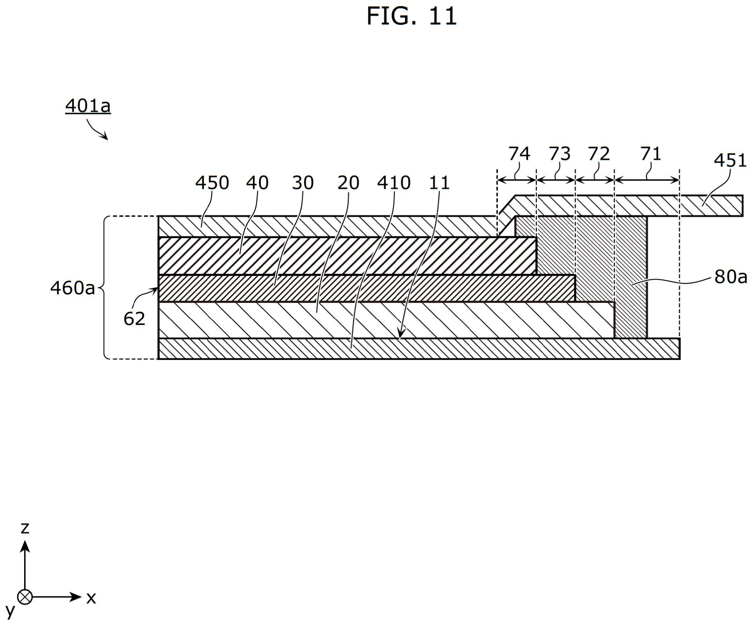

   FIG. 11 is a cross-sectional view of another battery according to Variation 4 of Embodiment 1.
[FIG. 12]

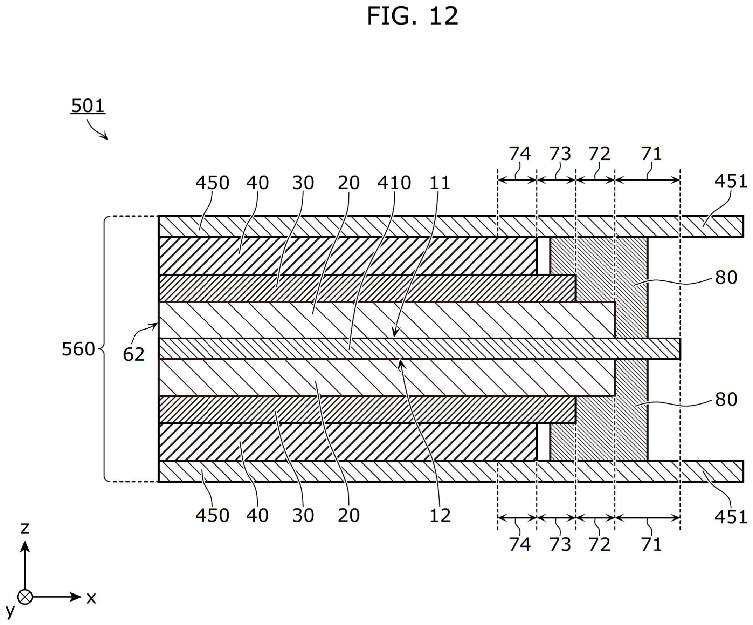

   FIG. 12 is a cross-sectional view of a battery according to Variation 5 of Embodiment 1.
[FIG. 13]

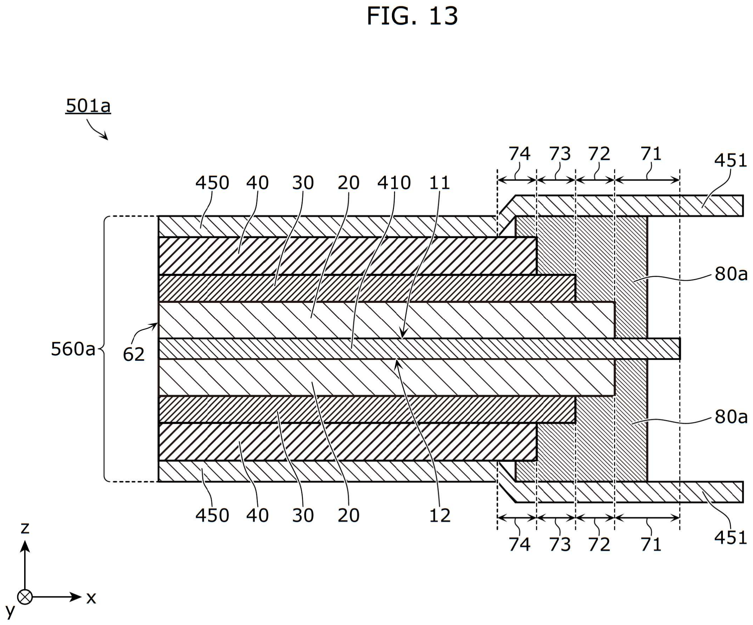

   FIG. 13 is a cross-sectional view of another battery according to Variation 5 of Embodiment 1.
[FIG. 14]

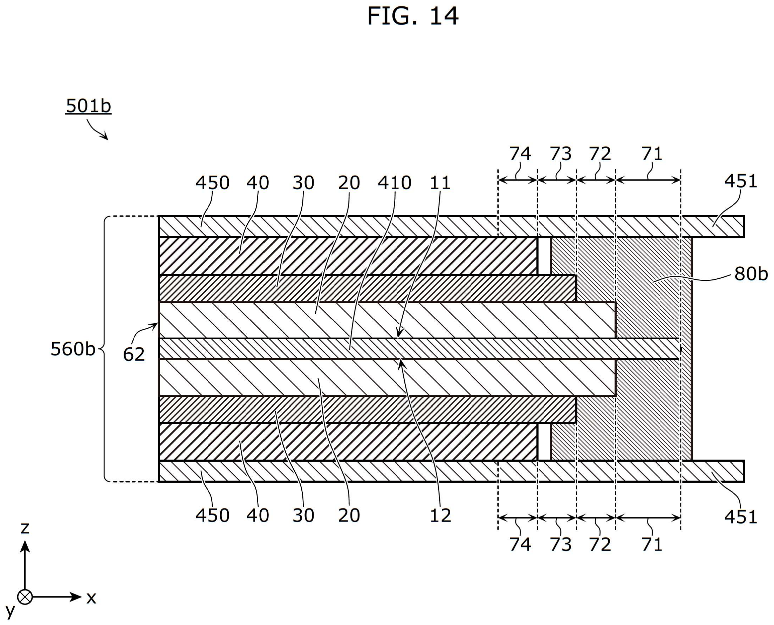

   FIG. 14 is a cross-sectional view of yet another battery according to Variation 5 of Embodiment 1.
[FIG. 15]

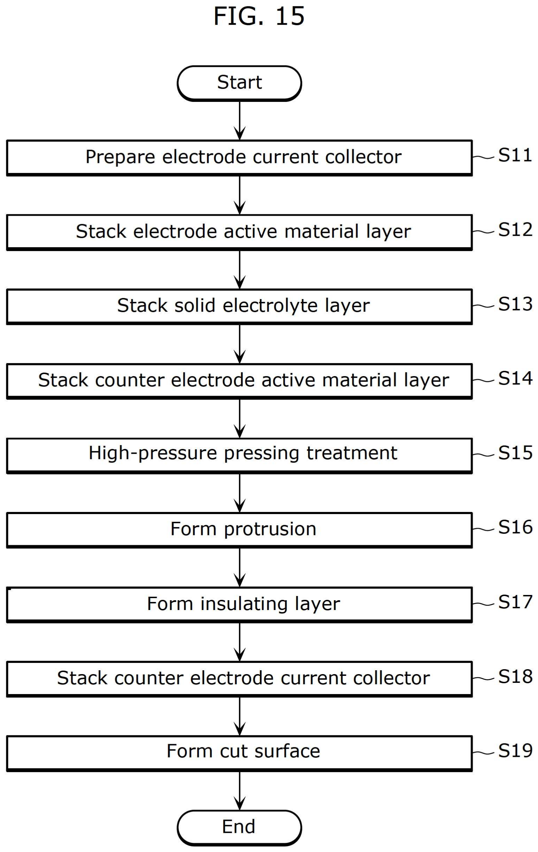

   FIG. 15 is a flow chart illustrating a method for manufacturing a battery according to Variation 5 of Embodiment 1.
[FIG. 16]

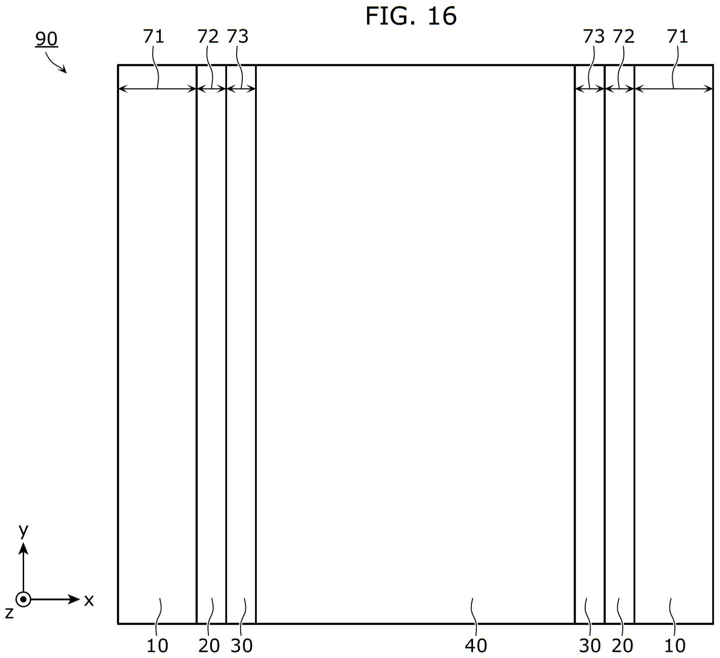

   FIG. 16 is a top view illustrating an example of a stacked electrode plate.
[FIG. 17]

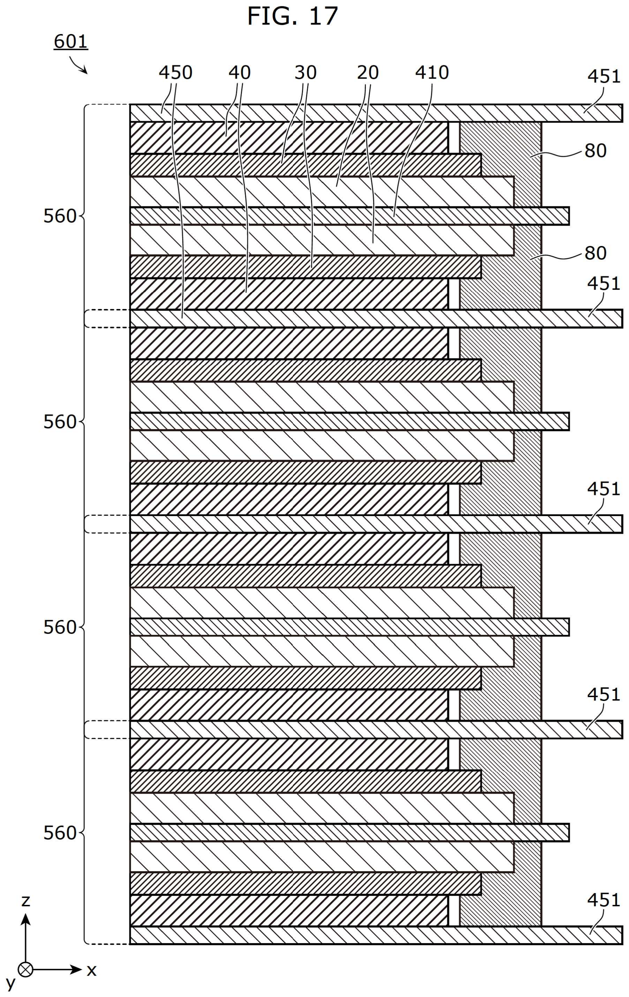

   FIG. 17 is a cross-sectional view of a battery according to Embodiment 2.
[FIG. 18]

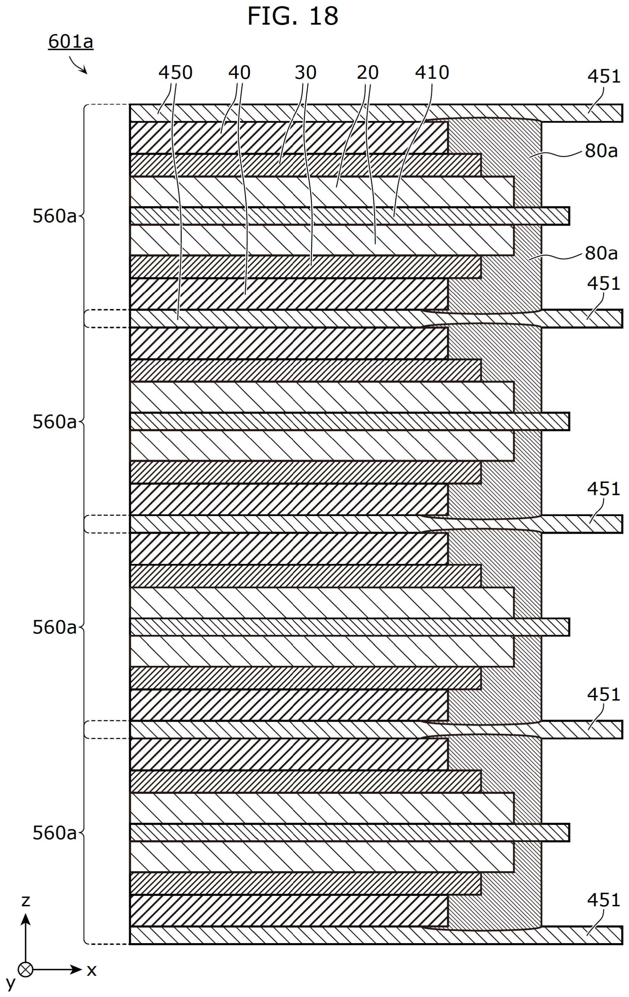

   FIG. 18 is a cross-sectional view of another battery according to Embodiment 2.
[FIG. 19]

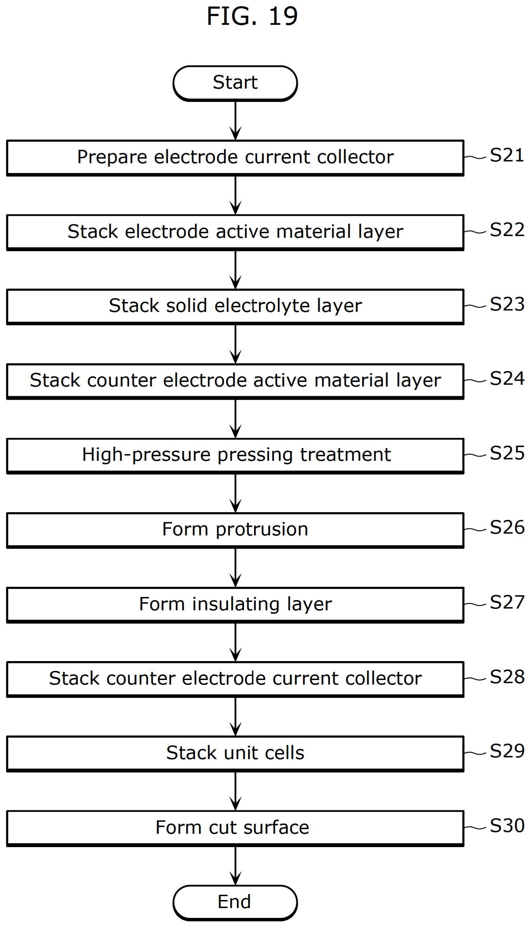

   FIG. 19 is a flow chart illustrating a method for manufacturing a battery according to Embodiment 2.

### [Description of Embodiments]

### (Circumstances Leading to Obtaining One Aspect of the Present Disclosure)

In a battery that includes a solid electrolyte layer, which is an electrolyte layer containing a solid electrolyte, and includes a unit cell in which an electrode current collector, an electrode active material layer, a solid electrolyte layer, a counter electrode active material layer, and a counter electrode current collector are stacked, short circuits are likely to occur due to the contact between the end portion of the electrode active material layer and the counter electrode active material layer or the counter electrode current collector, or contact between the end portion of the counter electrode active material layer and the electrode active material layer or the electrode current collector. In addition, in such a battery, terminals may be formed at the end portions of the battery to extract current. In cases where electrode active material layers are formed on both sides of the same electrode current collector, and the like, terminals may be formed in regions at the end portion of the electrode current collector that is not covered with the electrode active material layer, but in this region, short circuits are likely to occur due to contact between (i) the electrode current collector and (ii) the counter electrode active material layer and the counter electrode current collector. Furthermore, when a plurality of unit cells are stacked, the possibility of a short circuit at the end surface increases due to the misalignment of the stacked unit cells. In addition, when the end portion of the active material layer is exposed, short circuits are likely to occur due to falling out of the active material. Thus, the present inventors focused on the problem that the reliability of the battery is likely to be reduced when terminals are formed at the end portions of the unit cells. The present inventors also focused on the fact that this reduction in reliability of the battery can be suppressed by the battery manufacturing method.

Therefore, the present disclosure provides a highly reliable battery and the like.

### (Overview of the present disclosure)

The following is an overview of the present disclosure and shows examples of a battery and a battery manufacturing method according to the present disclosure.

The battery according to the first aspect of the present disclosure includes a unit cell including: an electrode current collector; an electrode active material layer disposed on a main surface of the electrode current collector; an electrolyte layer disposed on a side of the electrode active material layer opposite from the electrode current collector; a counter electrode active material layer disposed on a side of the electrolyte layer opposite from the electrode active material layer; and a counter electrode current collector disposed on a side of the counter electrode active material layer opposite from the electrolyte layer, wherein a first region not covered with the electrode active material layer is provided at an end portion of the main surface of the electrode current collector in a first direction that is a direction from a center of the main surface towards an outer edge of the main surface of the electrode current collector, a second region not covered with the electrolyte layer in a plan view of the main surface of the electrode current collector is provided at an end portion of the electrode active material layer in the first direction, and a third region not covered with the counter electrode active material layer in the plan view is provided at an end portion of the electrolyte layer in the first direction.

This allows the distance between (i) the electrode current collector and the electrode active material layer and (ii) the counter electrode active material layer and the counter electrode current collector by the second and third regions at the end portion of the unit cell in the first direction, where the first region is provided so that terminals can be easily formed on the electrode current collector. As a result, short circuits and the like caused by contact between different polarity electrodes are less likely to occur. Therefore, the reliability of the battery can be increased.

In addition, for example, the battery according to the second aspect of the present disclosure is a battery according to the first aspect, wherein the unit cell may include two electrode active material layers, two electrolyte layers, two counter electrode active material layers, and two counter electrode current collectors, the two electrode active material layers each being the electrode active material layer, the two electrolyte layers each being the electrolyte layer, the two counter electrode active material layers each being the counter electrode active material layer, the two counter electrode current collectors each being the counter electrode current collector, the two electrode active material layers may be disposed on two main surfaces of the electrode current collector, the two main surfaces including the main surface, the two electrolyte layers may be disposed on sides of the two electrode active material layers opposite from the electrode current collector, the two counter electrode active material layers may be disposed on sides of the two electrolyte layers opposite from the two electrode active material layers, the two counter electrode current collectors may be disposed on sides of the two counter electrode active material layers opposite from the two electrolyte layers, the first region may be provided at an end portion of each of the two main surfaces of the electrode current collector in the first direction, the second region may be provided at an end portion of each of the two electrode active material layers in the first direction, and the third region may be provided at an end portion of each of the two electrolyte layers in the first direction.

This allows currents from two electrode active material layers to be extracted from one electrode current collector, and thus the volume energy density can be increased. In addition, the distance between (i) the electrode current collector and the electrode active material layer and (ii) the counter electrode active material layer and the counter electrode current collector at the end portion of the unit cell in the first direction on both sides of the main surfaces of the electrode current collector becomes longer, resulting in short circuits less likely to occur, and the reliability of the battery can be improved.

In addition, for example, the battery according to the third aspect of the present disclosure is a battery according to the first aspect, wherein a fourth region not covered with the counter electrode current collector in the plan view may be provided at an end portion of the counter electrode active material layer in the first direction.

This allows the fourth region to further increase the distance between (i) the electrode current collector and the electrode active material layer and (ii) the counter electrode current collector at the end portion of the unit cell in the first direction, where the first region is provided so that terminals can be easily formed on the electrode current collector, resulting in short circuits further less likely to occur, and the reliability of the battery can be increased.

In addition, for example, the battery according to the fourth aspect of the present disclosure is a battery according to the third aspect, wherein the unit cell may include two electrode active material layers, two electrolyte layers, two counter electrode active material layers, and two counter electrode current collectors, the two electrode active material layers each being the electrode active material layer, the two electrolyte layers each being the electrolyte layer, the two counter electrode active material layers each being the counter electrode active material layer, the two counter electrode current collectors each being the counter electrode current collector, the two electrode active material layers may be disposed on two main surfaces of the electrode current collector, the two main surfaces including the main surface, the two electrolyte layers may be disposed on sides of the two electrode active material layers opposite from the electrode current collector, the two counter electrode active material layers may be disposed on sides of the two electrolyte layers opposite from the two electrode active material layers, the two counter electrode current collectors may be disposed on sides of the two counter electrode active material layers opposite from the two electrolyte layers, the first region may be provided at an end portion of each of the two main surfaces of the electrode current collector in the first direction, the second region may be provided at an end portion of each of the two electrode active material layers in the first direction, the third region may be provided at an end portion of each of the two electrolyte layers in the first direction, and the fourth region may be provided at an end portion of each of the two counter electrode active material layers in the first direction.

This allows currents from two electrode active material layers to be extracted from one electrode current collector, and thus the volume energy density can be increased. In addition, the distance between (i) the electrode current collector and the electrode active material layer and (ii) the counter electrode active material layer and the counter electrode current collector at the end portion of the unit cell in the first direction on both sides of the main surfaces of the electrode current collector becomes longer, resulting in short circuits less likely to occur, and the reliability of the battery can be improved.

In addition, for example, the battery according to the fifth aspect of the present disclosure is a battery according to any one of the first aspect to the fourth aspect, wherein the electrode active material layer may include an inclined surface in the second region, the inclined surface being inclined to approach the electrode current collector as the electrode active material layer extends in the first direction, and the electrolyte layer may include an inclined surface in the third region, the inclined surface being inclined to approach the electrode current collector as the electrolyte layer extends in the first direction.

This makes it difficult for corners to be formed in the electrode active material layer in the second region and the electrolyte layer in the third region, making it difficult for the materials in these layers to fall off, and short circuits are less likely to occur. Therefore, the reliability of the battery can be increased.

In addition, for example, the battery according to the sixth aspect of the present disclosure is a battery according to the third or fourth aspect, wherein the electrode active material layer may include an inclined surface in the second region, the inclined surface being inclined to approach the electrode current collector as the electrode active material layer extends in the first direction, the electrolyte layer may include an inclined surface in the third region, the inclined surface being inclined to approach the electrode current collector as the electrolyte layer extends in the first direction, and the counter electrode active material layer may include an inclined surface in the fourth region, the inclined surface being inclined to approach the electrode current collector as the counter electrode active material layer extends in the first direction.

This makes it difficult for corners to be formed in the electrode active material layer in the second region, the electrolyte layer in the third region, and the counter electrode active material layer in the fourth region, making it difficult for the materials in these layers to fall off, making it difficult for short circuits to occur. Therefore, the reliability of the battery can be increased.

In addition, for example, the battery according to the seventh aspect of the present disclosure is a battery according to any one of the first aspect to sixth aspect, wherein the electrode active material layer may include a recess in which the electrolyte layer in the third region is embedded.

This increases the bonding strength between the electrode active material layer and the electrolyte layer at the end portion of the unit cell in the first direction, making it difficult for the materials in these layers to fall off, and short circuits due to contact of different polarity electrodes are less likely to occur.

In addition, for example, the battery according to the eighth aspect of the present disclosure is a battery according to any one of the third aspect, fourth aspect, and sixth aspect, wherein the electrode active material layer may include a recess in which the electrolyte layer in the third region is embedded, and the electrolyte layer may include a recess in which the counter electrode active material layer in the fourth region is embedded.

This increases the bonding strength between the electrode active material layer and the electrolyte layer and the bonding strength between the electrolyte layer and the counter electrode active material layer at the end portion of the unit cell in the first direction, making it difficult for the materials in these layers to fall off, and short circuits due to contact of different polarity electrodes are less likely to occur.

In addition, for example, the battery according to the ninth aspect of the present disclosure is a battery according to any one of the first aspect to the eighth aspect, wherein the unit cell may further include an insulating layer that covers at least part of the first region, at least part of the second region, and at least part of the third region. In addition, for example, the battery according to the tenth aspect of the present disclosure is a battery according to any one of the third aspect, fourth aspect, sixth aspect, and eighth aspect, wherein the unit cell may further include an insulating layer that covers at least part of the first region, at least part of the second region, and at least part of the third region.

Accordingly, since the electrode current collector and the electrode active material layer are covered with the insulating layers extending up to the third region in the first and second regions, the possibility of a short circuit due to contact between (i) the electrode current collector and the electrode active material layer and (ii) the counter electrode current collector and the counter electrode active material layer can be greatly reduced. Therefore, the reliability of the battery can be increased.

In addition, for example, the battery according to the eleventh aspect of the present disclosure is a battery according to the tenth aspect, wherein the insulating layer may further cover at least part of the fourth region.

This makes it difficult for the electrolyte layer to fall off, and even if the electrolyte layer falls off, exposure of the electrode active material layer can be avoided, making it difficult for a short circuit due to contact between (i) the counter electrode current collector and the counter electrode active material layer and (ii) the electrode current collector and the electrode active material layer.

In addition, for example, the battery according to the twelfth aspect of the present disclosure is a battery according to any one of the ninth aspect to the eleventh aspect, wherein part of the end portion of the counter electrode current collector in the first direction may protrude in the first direction relative to the insulating layer in the plan view.

This allows terminals to be formed on the counter electrode current collector at the end portion of the battery in the first direction, resulting in the structure less complicated than when terminals are formed on the main surface of the counter electrode current collector, and the reliability of the battery can be increased.

In addition, for example, the battery according to the thirteenth aspect of the present disclosure is a battery according to any one of the first aspect to the twelfth aspect, wherein side surfaces of the electrode current collector, the electrode active material layer, the electrolyte layer, and the counter electrode active material layer may be flush with each other at an end portion of the unit cell in a second direction that is a direction from the center towards the outer edge of the main surface of the electrode current collector, the second direction being different from the first direction.

This allows a first region or the like to be provided at the end portion of the unit cell in the first direction, while at the end portion of the unit cell in the second direction different from the first direction, there are no steps on the side surfaces of the electrode active material layer, the electrolyte layer, and the counter electrode active material layer stacked on the electrode current collector, and spaces that do not function as batteries due to the steps are not formed, resulting in a substantial improvement in the volume energy density of the battery.

In addition, for example, the battery according to the fourteenth aspect of the present disclosure is a battery according to any one of the first aspect to the twelfth aspect, wherein side surfaces of the electrode current collector, the electrode active material layer, the electrolyte layer, the counter electrode active material layer, and the counter electrode current collector may be flush with each other at an end portion of the unit cell in a second direction that is a direction from the center towards the outer edge of the main surface of the electrode current collector, the second direction being different from the first direction.

This suppresses short circuits at the end portion of the unit cell in the first direction, which makes it easy to form terminals, ensuring reliability, while at the end portion of the unit cell in the second direction, there are no steps on the side surface of each layer at the end portion of the unit cell in the second direction, and spaces that do not function as batteries due to the steps are not formed, resulting in a substantial improvement in the volume energy density of the battery.

In addition, for example, the battery according to the fifteenth aspect of the present disclosure is a battery according to any one of the first aspect to the thirteenth aspect, may include a plurality of unit cells, each of the plurality of unit cells being the unit cell, wherein the plurality of unit cells are stacked.

This allows for a highly reliable stacked battery, since unit cells that are unlikely to cause short circuits at the end portions in the first direction are stacked.

In addition, for example, the battery manufacturing method according to the sixteenth aspect of the present disclosure, includes: stacking a plurality of counter electrode current collectors and a plurality of stacked electrode plates including an electrode current collector, an electrode active material layer, an electrolyte layer, and a counter electrode active material layer to cause the plurality of counter electrode current collectors to be stacked on a side of the counter electrode active material layer opposite from the electrolyte layer, the electrode active material layer being disposed on a main surface of the electrode current collector, the electrolyte layer being disposed on a side of the electrode active material layer opposite from the electrode current collector, the counter electrode active material layer being disposed on a side of the electrolyte layer opposite from the electrode active material layer; and pressing the plurality of stacked electrode plates and the plurality of counter electrode current collectors collectively after the stacking.

This allows a plurality of stacked electrode plates and a plurality of counter electrode current collectors to be pressed collectively, making it possible to reduce the number of handling. As a result, it is possible to prevent foreign matter from being caught in the stacking of a plurality of stacked electrode plates and a plurality of counter electrode current collectors, and a highly reliable battery can be manufactured.

In addition, for example, the battery manufacturing method according to the seventeenth aspect of the present disclosure is a battery manufacturing method according to the sixteenth aspect, wherein at least one of the plurality of stacked electrode plates may include only the electrode current collector as a current collector.

This allows one counter electrode current collector to be stacked so as to be shared by adjacent stacked electrode plates without overlapping the counter electrode current collectors, and thus the volume energy density can be increased.

In addition, for example, the battery manufacturing method according to the eighteenth aspect of the present disclosure is a battery manufacturing method according to the sixteenth or seventeenth aspect, wherein the unit cell may include two electrode active material layers, two electrolyte layers, and two counter electrode active material layers, the two electrode active material layers each being the electrode active material layer, the two electrolyte layers each being the electrolyte layer, the two counter electrolyte layers each being the counter electrolyte layer, the two electrode active material layers may be disposed on two main surfaces of the electrode current collector, the two main surfaces including the main surface, the two electrolyte layers may be disposed on sides of the two electrode active material layers opposite from the electrode current collector, and the two counter electrolyte layers may be disposed on sides of the two electrolyte layers opposite from the two electrode active material layers.

This allows currents from two electrode active material layers to be extracted from one electrode current collector, and thus the volume energy density can be increased.

In addition, for example, the method for manufacturing a battery according to the nineteenth aspect of the present disclosure is a method for manufacturing a battery according to any one of the sixteenth aspect to the eighteenth aspect, wherein a first region not covered with the electrode active material layer may be provided at an end portion of the main surface of the electrode current collector in a first direction that is a direction from a center of the main surface towards an outer edge of the main surface of the electrode current collector, a second region not covered with the electrolyte layer in a plan view of the main surface of the electrode current collector may be provided at an end portion of the electrode active material layer in the first direction, and a third region not covered with the counter electrode active material layer in the plan view may be provided at an end portion of the electrolyte layer in the first direction.

This allows the distance between (i) the electrode current collector and the electrode active material layer and (ii) the counter electrode active material layer and the counter electrode current collector by the second and third regions at the end portion of the unit cell in the first direction, where the first region is provided so that terminals can be easily formed on the electrode current collector. As a result, short circuits and the like caused by contact between different polarity electrodes are less likely to occur. Therefore, the reliability of the battery can be increased.

In addition, for example, the battery manufacturing method according to the twentieth aspect of the present disclosure is the battery manufacturing method according to the nineteenth aspect, wherein the counter electrode current collector may include a protrusion that is part of an end portion in the first direction protruding in the first direction.

This allows terminals to be formed on the counter electrode current collector at the end portion of the battery in the first direction, resulting in the structure less complicated than when terminals are formed on the main surface of the counter electrode current collector, and the reliability of the battery can be increased.

In the following, the embodiments will be specifically described with reference to the drawings.

It should be noted that all of the embodiments described below shows comprehensive or specific examples. The numerical values, shapes, materials, components, arrangement and connections of the components, steps, order of steps, and the like shown in the following embodiments are merely examples and are not intended to limit the present disclosure. In addition, among the components in the following embodiments, components not described in the independent claims are described as arbitrary components.

In addition, each figure is a schematic view and is not necessarily exactly illustrated. Therefore, for example, scales and the like in each figure do not necessarily match. In addition, in each figure, the same reference numerals are assigned to substantially the same configurations, and duplicate descriptions will be omitted or simplified.

In addition, in the present specification, terms that indicate the relationship between elements such as parallel or orthogonal, and terms that indicate the shape of elements such as rectangular or circular, as well as numerical ranges are not expressions that represent exact meanings, but are expressions that mean substantially equivalent ranges, including differences of approximately a few percent.

In addition, in the present specification and drawings, the x-axis, y-axis and z-axis represent the three axes of a three-dimensional Cartesian coordinate system. The x-axis and y-axis are directions parallel to the main surface of the electrode current collector, and the z-axis is a direction perpendicular to the main surface of the electrode current collector. When the battery has a rectangular shape in a plan view, the x-axis and y-axis are respectively in a direction parallel to the first side of the rectangle and in a direction parallel to the second side perpendicular to the first side. The z-axis is the stacking direction of a plurality of unit cells included in the battery. In addition, in the present specification, the "stacking direction" coincides with the direction normal to the main surface of the current collector and the active material layer. In addition, in the present specification, "plan view" refers to viewing from a direction perpendicular to the main surface of the electrode current collector unless otherwise stated.

In addition, in the present specification, the terms "above", "upward" and "below", "downward" do not refer to the upper direction (vertical upward) and lower direction (vertical downward) in absolute spatial recognition, but are used as terms defined by relative positional relationships based on the stacking order in the stacking configuration. In addition, the terms "above" and "below" also apply not only when two components are spaced apart from each other and there is another component between the two components, but also when the two components are placed in close contact with each other and the two components are in contact with each other. In the following description, the negative side of the z-axis is referred to as "downward" or "lower side," and the positive side of the z-axis is referred to as "upward" or "upper side".

In addition, unless otherwise stated in the present specification, "protruding" means protruding outward relative to the center of the unit cell in a cross-section view perpendicular to the main surface of the electrode current collector. "Element A protrudes relative to element B" means that in the protruding direction, the tip of element A protrudes more than the tip of element B, that is, the tip of element A is farther from the center of the unit cell than the tip of element B. The "protruding direction" is considered to be a direction parallel to the main surface of the electrode current collector. In addition, "protrusion of element A" means a portion of element A that protrudes relative to the tip of element B in the protruding direction. In addition, element B may be a portion other than the protrusion of element A. The elements include, for example, an active material layer, a solid electrolyte layer, an insulating layer, a current collector, and the like.

In addition, in the present specification, unless otherwise stated, ordinals such as "first" and "second" do not mean the number or order of components, and are used for the purpose of avoiding confusion and distinguishing between similar components.

### [Embodiment 1]

### [1. Configuration]

First, the configuration of the battery according to Embodiment 1 will be described with reference to FIG. 1 and FIG. 2.

FIG. 1 is a top view of battery 1 according to the present embodiment. FIG. 2 is a cross-sectional view of battery 1 according to the present embodiment. FIG. 1 illustrates the shape of battery 1 when viewed from the positive side of the z-axis. In addition, FIG. 2 is a cross-sectional view taken at the position shown along line II-II in FIG. 1.

As illustrated in FIG. 1 and FIG. 2, battery 1 according to the present embodiment includes unit cell 60 including electrode current collector 10, electrode active material layer 20, solid electrolyte layer 30, counter electrode active material layer 40, and counter electrode current collector 50. In unit cell 60, electrode current collector 10, electrode active material layer 20, solid electrolyte layer 30, counter electrode active material layer 40, and counter electrode current collector 50 are stacked in this order along the z-axis. As illustrated in FIG. 2, battery 1 is formed from a single unit cell 60. Battery 1 is, for example, an all-solid-state battery.

As illustrated in FIG. 1 and FIG. 2, unit cell 60 includes side surfaces 61 and 62 that face away from each other, and side surfaces 63 and 64 that face away from each other. Side surface 61 is the side surface of unit cell 60 in the direction in which the x-axis extends towards the positive side. Side surface 62 is the side surface of unit cell 60 in the direction in which the x-axis extends towards the negative side. Side surface 63 is the side surface of unit cell 60 in the direction in which the y-axis extends towards the positive side. Side surface 64 is the side surface of unit cell 60 in the direction in which the y-axis extends towards the negative side.

In the following, the direction in which the x-axis extends towards the positive side will be referred to as the "x-axis positive side direction". In addition, in the following, the direction in which the x-axis extends towards the negative side will be referred to as the "x-axis negative side direction". In addition, in the following, the direction in which the y-axis extends towards the positive side will be referred to as the "y-axis positive side direction". In addition, in the following, the direction in which the y-axis extends towards the negative side will be referred to as the "y-axis negative side direction". The x-axis positive side and x-axis negative side directions and the y-axis positive side and y-axis negative side directions are perpendicular to each other. In addition, the x-axis positive side direction and the x-axis negative side direction are opposite to each other, and the y-axis positive side direction and the y-axis negative side direction are opposite to each other. In this specification, the x-axis positive side direction is an example of a first direction that is a direction from the center towards the outer edge of main surface 11 of electrode current collector 10. In addition, the x-axis negative side direction is an example of a second direction that is a direction from the center towards the outer edge of main surface 11 of electrode current collector 10, and is different from the first direction. It should be noted that the y-axis positive side direction or the y-axis negative side direction may be the second direction.

In FIG. 1, first region 71, second region 72, third region 73, and fourth region 74 are provided at the end portion of unit cell 60 on the side surface 61 side, but these regions may be provided at the end portion of unit cell 60 on the side surface 62 side, the side surface 63 side, or the side surface 64 side. First region 71, second region 72, third region 73 and fourth region 74 will be described in detail later.

The shapes of battery 1 and unit cell 60 in a plan view are rectangular as illustrated in FIG. 1. That is, the shapes of battery 1 and unit cell 60 are generally flattened rectangular parallelepiped. Here, flattened means that the thickness is shorter than each side or the maximum width of the main surface. Each side or the maximum width of the main surface of battery 1 and unit cell 60 is, for example, at least 10 mm and at most 500 mm. The shapes of battery 1 and unit cell 60 in a plan view may be polygonal such as square, hexagonal or octagonal, or may be circular or elliptical. It should be noted that in the drawings according to this specification, the thickness of each layer is exaggerated in the illustration in order to make it easier to understand the layer structure of the unit cell. In addition, in the drawings according to this specification, the lengths of first region 71, second region 72, third region 73 and fourth region 74 in the x-axis positive side direction are exaggerated in the illustration in order to make it easier to understand the structure of the unit cell in first region 71, second region 72, third region 73 and fourth region 74.

Side surfaces 62, 63 and 64 of unit cell 60 are formed of the side surfaces of electrode current collector 10, electrode active material layer 20, solid electrolyte layer 30, counter electrode active material layer 40, and counter electrode current collector 50, and at least part thereof may be a flat plane. When side surfaces 62, 63 and 64 are flat planes, at least the side surfaces of electrode current collector 10, electrode active material layer 20, solid electrolyte layer 30 and counter electrode active material layer 40 in these flat planes are positioned on the same flat plane in a state where there are no steps from each other. That is, at the end portions of unit cell 60 in the x-axis negative side direction, y-axis positive side direction, and y-axis negative side direction, the side surfaces of electrode current collector 10, electrode active material layer 20, solid electrolyte layer 30 and counter electrode active material layer 40 are flush with each other. Furthermore, at the end portions of unit cell 60 in the x-axis negative side direction, y-axis positive side direction, and y-axis negative side direction, the side surfaces of electrode current collector 10, electrode active material layer 20, solid electrolyte layer 30, counter electrode active material layer 40, and counter electrode current collector 50 may be flush with each other. Accordingly, at the end portions of unit cell 60 where first region 71, second region 72, third region 73, and fourth region 74 are not provided, there are no steps on the side surfaces of the respective layers, and spaces that do not function as a battery due to the steps are not formed, resulting in a substantial improvement in the volume energy density of battery 1. In addition, the side surfaces of the respective layers can be made flush by cutting the layers together, and the like, making it easier to manufacture battery 1.

Side surfaces 62, 63 and 64 are, for example, cut surfaces. Specifically, side surfaces 62, 63 and 64 are surfaces formed by cutting with a blade or the like of a cutter or the like, and are surfaces including, for example, cutting marks such as fine grooves. Because they are cut surfaces, the side surfaces of the respective layers of unit cell 60 can be easily made flush. It should be noted that the cutting marks may be smoothed by polishing or the like. The shape of the cut surface is not limited.

As illustrated in FIG. 1, when the shape of unit cell 60 is rectangular in a plan view, each of side surfaces 61, 62, 63, and 64 forms one side of the rectangular in unit cell 60 in a plan view.

Unit cell 60 includes one electrode current collector 10, one electrode active material layer 20, one solid electrolyte layer 30, one counter electrode active material layer 40, and one counter electrode current collector 50. In a plan view, electrode current collector 10, electrode active material layer 20, solid electrolyte layer 30, counter electrode active material layer 40 and counter electrode current collector 50 overlap.

Electrode current collector 10 is in contact with electrode active material layer 20 on one main surface 11. The thickness of electrode current collector 10 is, for example, at least 5 µm and at most 100 µm. It should be noted that in this specification, the thickness of the current collector and each layer is the length in the stacking direction, and unless otherwise noted, it is the average value of the overall thickness.

Known materials can be used as the material for electrode current collector 10. For example, a foil-like body, a plate-like body, a mesh-like body, or the like made of copper, aluminum, nickel, iron, stainless steel, platinum, gold, two or more alloys thereof, or the like is used for electrode current collector 10. It should be noted that in addition to the foil-like body, plate-like body, mesh-like body, or the like, electrode current collector 10 may include a connection layer, which is a layer containing a conductive material, provided in a portion that contacts electrode active material layer 20.

Counter electrode current collector 50 is disposed on the side of counter electrode active material layer 40 opposite from the solid electrolyte layer 30 side. Counter electrode current collector 50 is in contact with the upper surface of counter electrode active material layer 40. Counter electrode current collector 50 faces electrode current collector 10 through electrode active material layer 20, solid electrolyte layer 30 and counter electrode active material layer 40. The thickness of counter electrode current collector 50 is, for example, at least 5 µm and at most 100 µm.

Known materials can be used as the material for counter electrode current collector 50. For example, a foil-like body, a plate-like body, a mesh-like body, or the like made of copper, aluminum, nickel, iron, stainless steel, platinum, gold, two or more alloys thereof, or the like is used for counter electrode current collector 50. It should be noted that in addition to the foil-like body, plate-like body, mesh-like body, or the like, counter electrode current collector 50 may include a connection layer, which is a layer containing a conductive material, provided in a portion that contacts counter electrode active material layer 40.

Electrode active material layer 20 is disposed on one main surface 11 of electrode current collector 10. In addition, the surface of electrode active material layer 20 opposite from the electrode current collector 10 side contacts solid electrolyte layer 30. Electrode active material layer 20 and counter electrode active material layer 40 face each other with solid electrolyte layer 30 interposed therebetween. In a plan view, the area of electrode active material layer 20 is larger than the area of counter electrode active material layer 40. The thickness of electrode active material layer 20 is, for example, at least 5 µm and at most 300 µm. The material used for electrode active material layer 20 will be described later.

Solid electrolyte layer 30 is disposed on the side of electrode active material layer 20 opposite from the electrode current collector 10 side. Solid electrolyte layer 30 is positioned between electrode active material layer 20 and counter electrode active material layer 40, and is in contact with electrode active material layer 20 and counter electrode active material layer 40. The thickness of solid electrolyte layer 30 is, for example, at least 5 µm and at most 150 µm. The material used for solid electrolyte layer 30 will be described later.

Counter electrode active material layer 40 is disposed on the side of solid electrolyte layer 30 opposite from the electrode active material layer 20 side. Counter electrode active material layer 40 is stacked on solid electrolyte layer 30 and faces electrode active material layer 20. The thickness of counter electrode active material layer 40 is, for example, at least 5 µm and at most 300 µm. The material used for counter electrode active material layer 40 will be described later.

Here, the materials used for solid electrolyte layer 30, electrode active material layer 20, and counter electrode active material layer 40 will be described.

Solid electrolyte layer 30 is an example of an electrolyte layer containing an electrolyte material. Solid electrolyte layer 30 includes at least a solid electrolyte as the electrolyte material, and may include a binder material if necessary. Solid electrolyte layer 30 may include a solid electrolyte having lithium ion conductivity. The electrolyte material contained in solid electrolyte layer 30 is, for example, entirely a solid electrolyte, excluding unavoidable impurities. It should be noted that the electrolyte material used for solid electrolyte layer 30 may further include a nonaqueous electrolyte, a gel electrolyte, or an ionic liquid, provided that the solid electrolyte is included as the main component. In the following, a description will be given of a case in which all of the electrolyte materials contained in solid electrolyte layer 30 are solid electrolytes.

Known materials such as lithium ion conductors, sodium ion conductors, or magnesium ion conductors can be used as the solid electrolyte. For example, solid electrolyte materials such as sulfide solid electrolytes, halide solid electrolytes, oxide solid electrolytes, polymer solid electrolytes, or complex hydride solid electrolytes are used as the solid electrolyte.

As the sulfide solid electrolyte, for example, a composite made of lithium sulfide (Li₂S) and diphosphorus pentasulfide (P₂S₅) is used in the case of a material capable of conducting lithium ions. In addition, as the sulfide solid electrolyte, sulfides such as Li₂S-SiS₂, Li₂S-B₂S₃ or Li₂S-GeS₂ may be used, and sulfides in which at least one of Li₃N, LiCl, LiBr, Li₃PO₄ or Li₄SiO₄ is added as an additive may be used.

As the solid oxide electrolyte, for example, Li₇La₃Zr₂O₁₂ (LLZ), Li_{1.3}Al_{0.3}Ti_{1.7}(PO₄)₃(LATP), or (La,Li)TiO₃(LLTO) or the like is used in the case of a material capable of conducting lithium ions.

As the binder material, for example, elastomers such as styrene-based elastomers is used, and organic compounds such as polyvinylidene fluoride, acrylic resins, or cellulose resins may be used.

In the present embodiment, one of electrode active material layer 20 or counter electrode active material layer 40 is a positive electrode active material layer, and the other is a negative electrode active material layer.

The positive electrode active material layer may contain at least a positive electrode active material, and may include at least one of an electrolyte material such as a solid electrolyte, a conductive aid, or a binder material, if necessary.

As the positive electrode active material, known materials capable of absorbing and releasing (intercalating and deintercalating, or dissolving and precipitating) lithium ions, sodium ions, magnesium ions, or the like can be used. As the positive electrode active material, examples include materials capable of deintercalating and intercalating lithium ions, such as transition metal oxides, transition metal fluorides, polyanion materials, fluorinated polyanion materials, transition metal sulfides, transition metal oxysulfides, transition metal oxynitrides, sulfur, and lithium-containing compounds thereof. Examples of lithium-containing transition metal oxides include Li(NiCoAl)O₂, Li(NiCoMn)O₂, LiCoO₂, and the like. Li(NiCoAl)O₂ means that it contains any ratio of Ni, Co, and Al. Li(NiCoMn)O₂ means that it contains any ratio of Ni, Co, and Mn.

As the solid electrolyte, the solid electrolyte materials exemplified above can be used. In addition, as the conductive material used for the conductive aid, for example, conductive carbons such as acetylene black, carbon black, graphite, carbon fiber, vapor-deposited carbon, or carbon nanotubes are used. In addition, as the binder material, the binder materials exemplified above can be used.

The negative electrode active material layer may contain at least a negative electrode active material, and may include at least one of an electrolyte material such as a solid electrolyte, a conductive aid, or a binder material, if necessary.

As the negative electrode active material, known materials capable of absorbing and releasing (intercalating and deintercalating, or dissolving and precipitating) lithium ions, sodium ions, magnesium ions, or the like can be used. As the negative electrode active material, in the case of materials capable of deintercalating and intercalating lithium ions, carbon materials such as natural graphite, artificial graphite, graphite carbon fiber or resin-fired carbon, metal lithium, lithium alloy, silicon (Si), tin (Sn), silicon compounds, tin compounds or oxides of lithium and transition metal elements, and the like are used.

The solid electrolyte materials exemplified above can be used as the solid electrolyte. In addition, the conductive material exemplified above can be used as the conductive aid. In addition, the binder material illustrated above can be used as the binder material.

Next, the end structure of unit cell 60 will be described.

As illustrated in FIG. 1 and FIG. 2, unit cell 60 is provided with first region 71, second region 72, third region 73, and fourth region 74 that are not covered with the upper layer at the end portion in the x-axis positive side direction (the end portion along side surface 61 in the example illustrated in FIG. 1).

Specifically, first region 71 not covered with electrode active material layer 20 is provided at the end portion of main surface 11 of electrode current collector 10 in the x-axis positive side direction. First region 71 is not in contact with electrode active material layer 20, solid electrolyte layer 30, counter electrode active material layer 40, and counter electrode current collector 50. In addition, second region 72 not covered with solid electrolyte layer 30 in a plan view is provided at the end portion of electrode active material layer 20 in the x-axis positive side direction. Second region 72 is not in contact with solid electrolyte layer 30, counter electrode active material layer 40, and counter electrode current collector 50. In addition, third region 73 not covered with counter electrode active material layer 40 in a plan view is provided at the end portion of solid electrolyte layer 30 in the x-axis positive side direction. Third region 73 is not in contact with counter electrode active material layer 40 and counter electrode current collector 50. Third region 73 is further away from electrode current collector 10 than second region 72. In addition, fourth region 74 not covered with counter electrode current collector 50 in a plan view is provided at the end portion of counter electrode active material layer 40 in the x-axis positive side direction. Fourth region 74 is further away from electrode current collector 10 than third region 73.

Accordingly, at the end portion of unit cell 60 where first region 71 is provided and terminals can be easily formed in electrode current collector 10, second region 72, third region 73, and fourth region 74 increase the distance between (i) electrode current collector 10 and electrode active material layer 20 and (ii) the end portion of counter electrode current collector 50, as well as the distance between (i) electrode current collector 10 and electrode active material layer 20 and (ii) the end portion of counter electrode current collector 50. As a result, short circuits and the like caused by contact between different polarity electrodes are less likely to occur. Therefore, the reliability of battery 1 can be increased. On the other hand, in conventional batteries, the structure is not provided with first region 71 to fourth region 74, and short circuits are likely to occur. For example, in the battery disclosed in PTL 3, the area corresponding to first region 71 is provided in the electrode current collector, and the area corresponding to third region 73 is provided in the solid electrolyte layer, but since the areas corresponding to second region 72 and fourth region 74 are not provided, the electrode current collector and the counter electrode current collector are easily in contact. In addition, in the battery disclosed in PTL 3, an insulating layer is provided on the main surface of the counter electrode current collector side to suppress short circuits, but in a battery with this configuration, it is difficult to obtain sufficient short circuit suppression if the positional accuracy in which the insulating layer is formed is increased, and it is difficult to improve the efficiency of manufacturing the battery.

In the example illustrated in FIG. 1, first region 71, second region 72, third region 73, and fourth region 74 are provided along side surface 61 in a plan view. First region 71, second region 72, third region 73, and fourth region 74 are elongated in a plan view, and in the example illustrated in FIG. 1, the direction perpendicular to the x-axis positive side direction (y-axis direction) is the longitudinal direction. In addition, fourth region 74, third region 73, second region 72, and first region 71 are arranged in this order in a plan view in the x-axis positive side direction.

The length of first region 71 is, for example, at least 1 mm and at most 20 mm. This allows the energy density of battery 1 to be increased while ensuring a region in which terminals can be easily formed in electrode current collector 10.

The lengths of second region 72, third region 73, and fourth region 74 are, for example, at least 0.1 mm and at most 5 mm. This allows the energy density of battery 1 to be increased while the distance described above is increased. The lengths of second region 72, third region 73 and fourth region 74 may be, for example, at least 0.5 mm and at most 2 mm.

The lengths of first region 71, second region 72, third region 73, and fourth region 74 may be the same as each other, or at least one of these may be different. In addition, the length of first region 71 may be longer than the lengths of second region 72, third region 73, and fourth region 74.

Here, the lengths of first region 71, second region 72, third region 73, and fourth region 74 are the lengths in the x-axis positive side direction in a plan view. The length of first region 71 is also the distance in a plan view between the outer edge of electrode current collector 10 and the outer edge of electrode active material layer 20 in the x-axis positive side direction. The length of second region 72 is also the distance in a plan view between the outer edge of electrode active material layer 20 and the outer edge of solid electrolyte layer 30 in the x-axis positive side direction. The length of third region 73 is also the distance in a plan view between the outer edge of solid electrolyte layer 30 and the outer edge of counter electrode active material layer 40 in the x-axis positive side direction. The length of fourth region 74 is also the distance in a plan view between the outer edge of counter electrode active material layer 40 and the outer edge of counter electrode current collector 50 in the x-axis positive side direction.

In the present embodiment, electrode active material layer 20 may be a negative electrode active material layer, and counter electrode active material layer 40 may be a positive electrode active material layer. In this case, fourth region 74 of counter electrode active material layer 40, which is not covered with counter electrode current collector 50, becomes a region that is difficult to function as a positive electrode. In addition, since electrode active material layer 20 is provided with second region 72 and solid electrolyte layer 30 is provided with third region 73, electrode active material layer 20 is relatively larger than counter electrode active material layer 40. For that reason, metal ions are easily incorporated into electrode active material layer 20, which is the negative electrode active material layer, and the precipitation of metals derived from metal ions is suppressed, so that the reliability of battery 1 can be further improved.

It should be noted that in the example illustrated in FIG. 1 and FIG. 2, electrode current collector 10, electrode active material layer 20, solid electrolyte layer 30, counter electrode active material layer 40 and counter electrode current collector 50 form a step-like structure at the end portion of unit cell 60 in the x-axis positive side direction, but the present disclosure is not limited thereto. FIG. 3 is a cross-sectional view illustrating another example of the end structure of unit cell 60.

In the example illustrated in FIG. 3, electrode active material layer 20 includes inclined surface 21 that is inclined in second region 72 so as to approach electrode current collector 10 as it extends in the x-axis positive side direction. Entire second region 72 is, for example, a region in which inclined surface 21 is formed. In addition, solid electrolyte layer 30 includes inclined surface 31 that is inclined in third region 73 so as to approach electrode current collector 10 as it extends in the x-axis positive side direction. Entire third region 73 is, for example, a region in which inclined surface 31 is formed. In addition, counter electrode active material layer 40 includes inclined surface 41 that is inclined in fourth region 74 so as to approach electrode current collector 10 as it extends in the x-axis positive side direction. Entire fourth region 74 is, for example, a region in which inclined surface 41 is formed. In the example illustrated in FIG. 3, inclined surface 21 and inclined surface 31 are connected, and inclined surface 31 and inclined surface 41 are connected. That is, inclined surfaces 21, 31, and 41 form one continuous inclined surface.

The formation of inclined surfaces 21, 31 and 41 makes it difficult for corners to be formed in electrode active material layer 20 of second region 72, solid electrolyte layer 30 of third region 73, and counter electrode active material layer 40 of fourth region 74, making it difficult for the materials in these layers to fall off, so that it becomes difficult for short circuits to occur. Therefore, the reliability of the battery can be increased.

The shape of these inclined surfaces can be formed, for example, by performing a high-pressure pressing treatment such as a roll press on the portion including the end portion of the stacked body in which electrode active material layer 20, solid electrolyte layer 30, and counter electrode active material layer 40 are stacked above electrode current collector 10 so that the end portions are in a step-like shape.

The angle formed by each of inclined surfaces 21, 31 and 41 with respect to main surface 11 is, for example, less than 45 degrees. This makes it more difficult for the layer material to fall off. The angle formed by each of inclined surfaces 21, 31 and 41 with respect to main surface 11 may be 30 degrees or less, or 10 degrees or less. In addition, the angle formed by each of inclined surfaces 21, 31 and 41 with respect to main surface 11 is, for example, one degree or more.

In addition, in the example illustrated in FIG. 3, electrode active material layer 20 includes recess 22 in which solid electrolyte layer 30 in third region 73 is embedded. In addition, solid electrolyte layer 30 includes recess 32 in which counter electrode active material layer 40 in fourth region 74 is embedded. This increases the bonding strength of the layers stacked above and below at the end portions in the x-axis positive side direction, making it difficult for the materials of these layers to fall off, and delamination is also suppressed. For that reason, short circuits due to contact of different polarity electrodes are less likely to occur. This embedded shape can be formed, for example, by performing a high-pressure pressing treatment such as a roll press on the portion including the end portion of the stacked body in which electrode active material layer 20, solid electrolyte layer 30, and counter electrode active material layer 40 are stacked on electrode current collector 10 so that the end portions are in a step-like shape.

The depth of each of recesses 22 and 32 is, for example, at least 1 µm and at most 10 µm.

In addition, in the example illustrated in FIG. 3, the surface of electrode active material layer 20 on the solid electrolyte layer 30 side at the lower side of inclined surface 41 (that is, the position overlapping with inclined surface 41 in a plan view) includes a portion that is inclined so as to be away from electrode current collector 10 as it extends in the x-axis positive side direction. For that reason, at a position of the outer edge of counter electrode active material layer 40 in the x-axis positive side direction in a plan view, the thickness of electrode active material layer 20 is greater than the thickness of electrode active material layer 20 at a position further inward than that position.

It should be noted that the structure of the end portions of electrode active material layer 20, solid electrolyte layer 30, and counter electrode active material layer 40 illustrated in FIG. 3 in the x-axis positive side direction may be included in the batteries according to Embodiments and respective Variations described below.

### [2. Variations]

In the following, batteries according to variations of the present embodiment will be described. It should be noted that in the following description of the variations, differences between Embodiment 1 and respective Variations will be mainly described, and descriptions of commonalities will be omitted or simplified.

### [2-1. Variation 1]

First, a battery according to Variation 1 of Embodiment 1 will be described. FIG. 4 is a cross-sectional view of battery 101 according to the present variation.

As illustrated in FIG. 4, battery 101 includes unit cell 160 and is formed from one unit cell 160. Compared to unit cell 60 according to Embodiment 1, unit cell 160 is different in that it includes two electrode active material layers 20, two solid electrolyte layers 30, two counter electrode active material layers 40, and two counter electrode current collectors 50.

As illustrated in FIG. 4, two electrode active material layers 20 are respectively disposed on two main surfaces 11 and 12 of electrode current collector 10. Two solid electrolyte layers 30 are disposed on the sides of two electrode active material layers 20 opposite from electrode current collector 10. Two counter electrode active material layers 40 are disposed on the sides of two solid electrolyte layers 30 opposite from electrode active material layer 20. Two counter electrode current collectors 50 are disposed on the sides of two counter electrode active material layers 40 opposite from solid electrolyte layer 30.

In addition, as illustrated in FIG. 4, at the end portions of both main surfaces 11 and 12 of electrode current collector 10 in the x-axis positive side direction, first region 71 not covered with either of two electrode active material layers 20 is provided. At the end portion of each of two electrode active material layers 20 in the x-axis positive side direction, second region 72 not covered with either of two solid electrolyte layers 30 is provided. At the end portion of each of two solid electrolyte layers 30 in the x-axis positive side direction, third region 73 not covered with either of two counter electrode active material layers 40 is provided. At the end portion of each of two counter electrode active material layers 40 in the x-axis positive side direction, fourth region 74 not covered with either of two counter electrode current collectors 50 is provided.

In this way, in unit cell 160, a structure similar to the stacked structure of electrode active material layer 20, solid electrolyte layer 30, counter electrode active material layer 40, and counter electrode current collector 50 formed on main surface 11 of electrode current collector 10 of unit cell 60 is also formed upside down on main surface 12 facing away from main surface 11 of electrode current collector 10. For that reason, unit cell 160 has a symmetrical stacked structure with electrode current collector 10 interposed therebetween.

This allows currents from the two electrode active material layers 20 to be extracted from one electrode current collector 10, and thus the volume energy density can be increased. In addition, since first region 71, second region 72, third region 73, and fourth region 74 are provided on both sides of electrode current collector 10 in the stacking direction, reliability can also be ensured by increasing the distance between (i) electrode current collector 10 and electrode active material layer 20 and (ii) the end portion of counter electrode active material layer 40, as well as the distance between (i) electrode current collector 10 and electrode active material layer 20 and (ii) the end portion of counter electrode current collector 50. In addition, since the stacked structures consisting of electrode active material layers 20, solid electrolyte layers 30, counter electrode active material layers 40, and counter electrode current collectors 50 are formed on both main surfaces 11 and 12 of electrode current collector 10, when unit cells 160 are densified by pressing or the like, differences in stresses generated on both sides of electrode current collector 10 in the stacking direction are less likely to occur, and warping of unit cell 160 can be suppressed. In addition, even if stresses occur due to expansion and contraction of electrode active material layer 20 and counter electrode active material layer 40 when using battery 101, differences in stresses occurring on both sides of electrode current collector 10 in the stacking direction are unlikely to occur, and warping of unit cell 160 can be suppressed.

### [2-2. Variation 2]

Next, a battery according to Variation 2 of Embodiment 1 will be described. FIG. 5 is a cross-sectional view of battery 201 according to the present variation.

As illustrated in FIG. 5, battery 201 includes unit cell 260 and is formed from one unit cell 260. Compared with unit cell 60 according to Embodiment 1, unit cell 260 is different in that it further includes insulating layer 80.

As illustrated in FIG. 5, insulating layer 80 covers part of first region 71 on the second region 72 side, the entire region of second region 72, and part of third region 73 on the second region 72 side. Accordingly, since in first region 71 and second region 72, electrode current collector 10 and electrode active material layer 20 are covered with insulating layer 80 extending up to third region 73, the possibility that electrode current collector 10 and electrode active material layer 20 will contact counter electrode current collector 50 and counter electrode active material layer 40 can be greatly reduced. Therefore, the reliability of battery 201 can be increased.

Insulating layer 80 does not cover part of first region 71 and part of third region 73. A gap is provided between counter electrode active material layer 40 and insulating layer 80. In addition, electrode current collector 10 protrudes from the end surface of insulating layer 80 in the x-axis positive side direction. In addition, insulating layer 80 contacts part of first region 71 on the second region 72 side, the entire region of second region 72, and part of third region 73 on the second region 72 side. Insulating layer 80 also contacts the end surfaces of electrode active material layer 20 and solid electrolyte layer 30 in the x-axis positive side direction.

The length of the portion in which insulating layer 80 and first region 71 are in contact with each other is, for example, 100 µm or more. Since this reduces the possibility of exposure of electrode current collector 10 and electrode active material layer 20, the possibility of electrode current collector 10 and electrode active material layer 20 coming into contact with counter electrode current collector 50 and counter electrode active material layer 40 can be reduced, and the reliability of battery 201 can be increased. The length of the portion in which insulating layer 80 and first region 71 are in contact with each other is the length in the x-axis positive side direction in a plan view, and also is the distance in a plan view between the outer edge of electrode active material layer 20 and the outer edge of insulating layer 80 in the x-axis positive side direction.

In addition, the height of insulating layer 80 from main surface 11 (in other words, the distance from main surface 11 to the surface of insulating layer 80 on the opposite side of electrode current collector 10) is less than or equal to the distance from main surface 11 to the main surface of counter electrode current collector 50 on the electrode current collector 10 side. This makes it possible to effectively use the space above insulating layer 80 when forming terminals on counter electrode current collector 50. In addition, when batteries 201 are stacked and used, it is possible to stack batteries 201 easily.

It should be noted that insulating layer 80 is only needed to cover at least part of first region 71, at least part of second region 72, and at least part of third region 73. For example, insulating layer 80 may cover at least one of first region 71 or third region 73 in the x-axis positive side direction, and may not cover part of second region 72. In addition, in the longitudinal direction (y-axis direction) of first region 71, second region 72, and third region 73 in a plan view, insulating layer 80 may cover the entirety of first region 71, second region 72, and third region 73, or may cover only part of them.

Insulating layer 80 has, for example, electronic and ionic insulating properties. For example, an insulating tape, an insulating resin, or the like is used for insulating layer 80. Examples of resins used for the component parts of the insulating tape and the insulating resin include silicone resin, epoxy resin, acrylic resin, polyimide resin, and the like. The resin may be a thermosetting resin or an ultraviolet curable resin. By containing resin, insulating layer 80 can enhance its bonding property to electrode current collector 10, electrode active material layer 20 and solid electrolyte layer 30 by the anchor effect or the like, where the resin interpenetrates into electrode current collector 10, electrode active material layer 20 and solid electrolyte layer 30. In addition, insulating layer 80 may include a solid electrolyte. As the solid electrolyte, the solid electrolyte materials exemplified above can be used. As the solid electrolyte, the same material as the solid electrolyte material used for solid electrolyte layer 30 may be used.

It should be noted that fourth region 74 may also be covered with an insulating layer. FIG. 6 is a cross-sectional view of another battery 201a according to the present variation.

Battery 201a includes unit cell 260a and is formed from one unit cell 260a. Unit cell 260a has a configuration in which insulating layer 80 of unit cell 260 is changed to insulating layer 80a. In addition to the region covered with insulating layer 80, insulating layer 80a further covers fourth region 74.

As illustrated in FIG. 6, insulating layer 80a covers part of first region 71 on the second region 72 side, the entire region of second region 72, the entire region of third region 73, and part of fourth region 74 on the third region 73 side. This makes it difficult for solid electrolyte layer 30 to fall off, and even if solid electrolyte layer 30 falls off, exposure of electrode active material layer 20 can be avoided, and short circuits are less likely to occur due to contact between (i) counter electrode current collector 50 and counter electrode active material layer 40 and (ii) electrode current collector 10 and electrode active material layer 20.

Insulating layer 80a does not cover part of first region 71 and part of fourth region 74. A gap is provided between counter electrode current collector 50 and insulating layer 80a. In addition, electrode current collector 10 protrudes in the x-axis positive side direction relative to the end surface of insulating layer 80a in the x-axis positive side direction. In addition, insulating layer 80a is in contact with the end surfaces of electrode active material layer 20, solid electrolyte layer 30, and counter electrode active material layer 40 in the x-axis positive side direction.

It should be noted that insulating layer 80a is only needed to cover at least part of first region 71, at least part of second region 72, at least part of third region 73, and at least part of fourth region 74. For example, insulating layer 80a may cover the entire region of at least one of first region 71 or fourth region 74 in the x-axis positive side direction, and may not cover at least one of par of second region 72 or part of third region 73. In addition, in the longitudinal direction (y-axis direction) of first region 71, second region 72, third region 73, and fourth region 74 in a plan view, insulating layer 80a may cover the entirety of first region 71, second region 72, third region 73 and fourth region 74, or may cover only part of them.

### [2-3. Variation 3]

Next, a battery according to Variation 3 of Embodiment 1 will be described.

The effect of improved reliability by insulating layers 80 and 80a such as batteries 201 and 201a according to Variation 2 described above manifests in the same manner even when electrode active material layers 20 are formed on main surfaces 11 and 12 on both sides of electrode current collector 10, such as battery 101 according to Variation 1. FIG. 7 is a cross-sectional view of battery 301 according to the present variation. FIG. 8 is a cross-sectional view of another battery 301a according to the present variation.

As illustrated in FIG. 7, battery 301 includes unit cell 360 and is formed from one unit cell 360. Compared with unit cell 160 according to Variation 1, unit cell 360 is different in that it further includes two insulating layers 80. One of two insulating layers 80 is disposed on the main surface 11 side of electrode current collector 10 and covers at least part of first region 71, at least part of second region 72, and at least part of third region 73. The other of two insulating layers 80 is disposed on the main surface 12 side of electrode current collector 10 and covers at least part of first region 71, at least part of second region 72, and at least part of third region 73.

In addition, as illustrated in FIG. 8, battery 301a includes unit cell 360a and is formed from one unit cell 360a. Compared with unit cell 160 according to Variation 1, unit cell 360a is different in that it further includes two insulating layers 80a. One of two insulating layers 80a is disposed on the main surface 11 side of electrode current collector 10 and covers at least part of first region 71, at least part of second region 72, at least part of third region 73, and at least part of fourth region 74. The other of two insulating layers 80a is disposed on the main surface 12 side of electrode current collector 10 and covers at least part of first region 71, at least part of second region 72, at least part of third region 73, and at least part of fourth region 74.

### [2-4. Variation 4]

Next, a battery according to Variation 4 of Embodiment 1 will be described. FIG. 9 is a top view of battery 401 according to the present variation. FIG. 10 is a cross-sectional view of battery 401 according to the present variation. FIG. 9 illustrates the shape of battery 401 in a plan view as seen from the z-axis positive side. In addition, FIG. 10 is a cross-sectional view taken at the position illustrated along line X-X in FIG. 9. It should be noted that in FIG. 9, the outlines of electrode active material layer 20 and solid electrolyte layer 30 when viewed through insulating layer 80 are illustrated by dashed lines.

As illustrated in FIG. 9 and FIG. 10, battery 401 includes unit cell 460 and is formed from one unit cell 460. Compared with unit cell 260 according to Variation 2, unit cell 460 is different in that electrode current collector 10 and counter electrode current collector 50 are replaced with electrode current collector 410 and counter electrode current collector 450.

Electrode current collector 410 includes protrusion 411 which is a portion where part of the end portion of electrode current collector 410 in the x-axis positive side direction protrudes in the x-axis positive side direction relative to other parts. Electrode current collector 410 has a shape in which rectangular tab-shaped protrusion 411 is provided on electrode current collector 10 mentioned above, whose shape is rectangular in a plan view. Protrusion 411 functions, for example, as a lead on which terminals are formed. Another lead material may be further bonded to protrusion 411. In the example illustrated in FIG. 9, first region 71 is also provided further inward than protrusion 411 on electrode current collector 410, but main surface 11 at the portion other than protrusion 411 may be covered with electrode active material layer 20. In addition, in the example illustrated in FIG. 9, the portion between protrusion 411 and electrode active material layer 20 in first region 71 is not covered with insulating layer 80 in a plan view, but that portion may be covered with insulating layer 80. It should be noted that electrode current collector 410 may not include protrusion 411. That is, electrode current collector 10 may be used instead of electrode current collector 410.

Counter electrode current collector 450 includes protrusion 451 which is a portion where part of the end portion of counter electrode current collector 450 in the x-axis positive side direction protrudes in the x-axis positive side direction relative to other parts. Counter electrode current collector 450 has a shape in which rectangular tab-shaped protrusion 451 is provided on counter electrode current collector 50 mentioned above, whose shape is rectangular in a plan view. Protrusion 451 protrudes in the x-axis positive side direction relative to insulating layer 80 in a plan view. Protrusion 451 functions, for example, as a lead on which terminals are formed. Yet another lead material may be further bonded to protrusion 451. In addition, the entire end portion of counter electrode current collector 450 in the x-axis positive side direction may protrude in the x-axis positive side direction relative to insulating layer 80 in a plan view.

Protrusion 451 faces electrode current collector 410, electrode active material layer 20, and solid electrolyte layer 30 through insulating layer 80. In addition, protrusion 411 and protrusion 451 are arranged at positions where they do not overlap in a plan view. It should be noted that insulating layer 80 may not be formed in a position where it does not overlap with protrusion 451 in a plan view.

In this way, in battery 401, protrusion 451, which is part of the end portion of counter electrode current collector 450 in the x-axis positive side direction, protrudes in the x-axis positive side direction relative to insulating layer 80 in a plan view. This enables terminals to be formed on counter electrode current collector 450 at the end portion of battery 401, and the structure is not complicated than when terminals are formed on the main surface of counter electrode current collector 450, so that the reliability of battery 401 can be improved.

It should be noted that instead of unit cell 260 according to Variation 2, another unit cell 260a according to Variation 2 may include electrode current collector 410 and counter electrode current collector 450. FIG. 11 is a cross-sectional view of another battery 401a according to the present variation.

Battery 401a includes unit cell 460a and is formed from one unit cell 460a. Compared with unit cell 260a according to Variation 2, unit cell 460a is different in that it includes electrode current collector 410 and counter electrode current collector 450 instead of electrode current collector 10 and counter electrode current collector 50.

In unit cell 460a, fourth region 74 is covered with insulating layer 80a, so that protrusion 451 is partially bent and climbs over insulating layer 80a covering fourth region 74.

### [2-5. Variation 5]

Next, a battery according to Variation 5 of Embodiment 1 will be described.

The effect of a case in which part of counter electrode current collector 450 such as batteries 401 and 401a according to Variation 4 described above protrudes in the x-axis positive side direction relative to insulating layer 80 manifests in the same manner even when electrode active material layers 20 and the like are formed on both sides of electrode current collector 10, such as batteries 301 and 301a according to Variation 3. FIG. 12 is a cross-sectional view of battery 501 according to the present variation. FIG. 13 is a cross-sectional view of another battery 501a according to the present variation.

As illustrated in FIG. 12, battery 501 includes unit cell 560 and is formed from one unit cell 560. Compared with unit cell 360 according to Variation 3, unit cell 560 is different in that it includes electrode current collector 410 and two counter electrode current collectors 450 instead of electrode current collector 10 and two counter electrode current collectors 50. Protrusions 451 of two counter electrode current collectors 450 face each other with two insulating layers 80 interposed therebetween.

In addition, as illustrated in FIG. 13, battery 501a includes unit cell 560a and is formed from one unit cell 560a. Compared with unit cell 360a according to Variation 3, unit cell 560a is different in that it includes electrode current collector 410 and two counter electrode current collectors 450 instead of electrode current collector 10 and two counter electrode current collectors 50. Protrusions 451 of two counter electrode current collectors 450 face each other with two insulating layers 80a interposed therebetween.

It should be noted that when counter electrode current collector 450 includes protrusion 451, the portions of electrode current collector 410 that overlap with protrusion 451 in a plan view may be covered with an insulating layer. FIG. 14 is a cross-sectional view of yet another battery 501b according to the present variation.

As illustrated in FIG. 14, battery 501b includes unit cell 560b and is formed from one unit cell 560b. Unit cell 560b has a configuration in which two insulating layers 80 of unit cell 560 are changed to insulating layer 80b.

In addition to the regions covered with insulating layer 80, insulating layer 80b covers the end surface of electrode current collector 410 in the x-axis positive side direction other than the location where protrusion 411 is formed. This can further suppress short circuits caused by contact between protrusion 451 and electrode current collector 410. In the example illustrated in FIG. 14, insulating layer 80b integrally covers the end surfaces of electrode current collector 410 in the x-axis positive side direction and first region 71, second region 72, and third region 73 on both sides of main surfaces 11 and 12 of electrode current collector 410. It should be noted that insulating layer 80b may not cover other portions as long as it covers the portions that overlap with protrusion 451 in a plan view among the end surfaces of electrode current collector 410 in the x-axis positive side direction. In addition, instead of including insulating layer 80b that integrally covers (i) the end surface in the x-axis positive side direction of electrode current collector 410 and (ii) first regions 71, second regions 72, and third regions 73 on both main surfaces 11 and 12 of electrode current collector 410, unit cell 560b may have a configuration including insulating layer 80 and another insulating layer that covers the end surfaces of insulating layer 80 and electrode current collector 410 in the x-axis positive side direction. In addition, in unit cells 460, 460a, and 560a described above, the end surface of electrode current collector 410 in the x-axis positive side direction may be covered with an insulating layer.

### [3. Manufacturing method]

Next, a battery manufacturing method according to the present embodiment and each variation of the present embodiment will be described. The following description will focus on the manufacturing method of battery 501 according to Variation 5 of Embodiment 1, but other batteries can also be manufactured by appropriately applying the following manufacturing method. FIG. 15 is a flow chart illustrating a manufacturing method of battery 501 according to Variation 5 of Embodiment 1. It should be noted that the manufacturing method of battery 501 described below is an example, and the manufacturing method of battery 501 is not limited to the following example.

First, in the manufacturing method of battery 501, electrode current collector 10 in which protrusion 411 is not formed is prepared (step S11). Next, electrode active material layer 20 is stacked on both main surfaces 11 and 12 of electrode current collector 10 (step S12). At this time, electrode active material layer 20 is stacked on main surfaces 11 and 12 so that first region 71 not covered with electrode active material layer 20 is provided at the end portions of main surfaces 11 and 12 in the x-axis positive side direction. It should be noted that when a battery is manufactured where no electrode active material layer 20 or the like is stacked on the main surface 12 side of battery 1 and the like, electrode active material layer 20 is stacked only on main surface 11.

Next, solid electrolyte layer 30 is stacked on the side of electrode active material layer 20 opposite from electrode current collector 10 (step S13). At this time, solid electrolyte layer 30 is stacked on electrode active material layer 20 so that second region 72 not covered with solid electrolyte layer 30 is provided at the end portion of electrode active material layer 20 in the x-axis positive side direction.

Next, counter electrode active material layer 40 is stacked on the side of solid electrolyte layer 30 opposite from electrode active material layer 20 (step S14). At this time, counter electrode active material layer 40 is stacked on solid electrolyte layer 30 so that third region 73 not covered with counter electrode active material layer 40 is provided at the end portion of solid electrolyte layer 30 in the x-axis positive side direction.

When stacking electrode active material layer 20, solid electrolyte layer 30, and counter electrode active material layer 40, high-pressure pressing treatment (step S15) is performed after each step from step S12 to step S14 as necessary. This results in a stacked electrode plate in which electrode active material layer 20, solid electrolyte layer 30, and counter electrode active material layer 40 are stacked on both main surfaces 11 and 12 of electrode current collector 10 in this order from the sides of main surfaces 11 and 12.

Electrode active material layer 20, solid electrolyte layer 30, and counter electrode active material layer 40 are each formed in order, for example, by a wet coating method. By using a wet coating method, electrode active material layer 20, solid electrolyte layer 30 and counter electrode active material layer 40 can be easily stacked to electrode current collector 10. As the wet coating method, coating methods such as die coating, doctor blade, roll coater, screen printing, or ink jet coating methods are used, but the present disclosure is not limited to these methods.

When wet coating is used, a coating formulation process is performed to obtain a slurry by appropriately mixing the materials that form each of electrode active material layer 20, solid electrolyte layer 30, and counter electrode active material layer 40 with a solvent.

The solvent used in the coating formulation process may employ a solvent known to be used in the fabrication of a known all-solid-state battery (for example, a lithium-ion all-solid-state battery).

The layer coating process of the slurry of each layer obtained in the coating formulation process is performed on both main surfaces 11 and 12 of electrode current collector 10 in the order of electrode active material layer 20, solid electrolyte layer 30 and counter electrode active material layer 40. At this time, after the layer coating process of the layer the layer coating process of which is performed earlier is completed, the layer coating of the next layer may be performed, or on the way of the layer coating process of the layer the layer coating process of which is performed earlier, the layer coating process of the next layer may be started. That is, steps S12, S13 and S14 may be performed simultaneously.

The layer coating process of the slurry of each layer is sequentially performed, and after all the layers are coated, a high-pressure pressing treatment (step S15) is carried out to promote filling of the material of each layer. It should be noted that the high-pressure pressing treatment may be performed for each coating of the layer. For example, in the coating layering processes of electrode active material layer 20, solid electrolyte layer 30, and counter electrode active material layer 40, the high-pressure pressing treatment may be performed for each coating layering process of one layer, may be performed separately after the coating layering processes of any two layers and after the coating layering process of one layer, or may be performed collectively after the coating layering processes of all three layers. If the high-pressure pressing treatment is carried out more than once, the pressing may be performed so that the pressure of the final high-pressure pressing treatment is at the highest. In addition, for the high-pressure pressing treatment, for example, a roll press, a flat plate press, an isotropic press (ISP), or the like is used.

In addition, when a wet coating method is used, a heat treatment is performed to remove the solvent before the high-pressure pressing treatment. The heat treatment is performed, for example, after each coating of electrode active material layer 20, solid electrolyte layer 30, and counter electrode active material layer 40, but may be performed collectively after electrode active material layer 20, solid electrolyte layer 30, and counter electrode active material layer 40 are stacked. It should be noted that at least one of the heat treatment or the high pressure pressing treatment may not be performed.

By performing the layer coating method in this way, the bondability of the interfaces between electrode current collector 10, electrode active material layer 20, solid electrolyte layer 30, and counter electrode active material layer 40 can be improved and the interface resistance can be reduced. In addition, bondability can be improved and grain boundary resistance can be reduced in the powder materials used for electrode active material layer 20, solid electrolyte layer 30 and counter electrode active material layer 40. That is, good interfaces are formed between layers of electrode active material layer 20, solid electrolyte layer 30, and counter electrode active material layer 40, and between the powder materials inside the layers.

It should be noted that steps S12 to S15 may be performed in a series of continuous processes such as a roll to roll method.

In addition, the stacked electrode plate may be in a size that corresponds to one battery 501 in a plan view, or may be in a size in a plan view that can be fragmented and used for a plurality of batteries 501. FIG. 16 is a top view illustrating an example of stacked electrode plate 90. As illustrated in FIG. 16, stacked electrode plate 90 is provided with first regions 71, second regions 72 and third regions 73 formed at end portions of the x-axis on both positive and negative sides. In addition, stacked electrode plate 90 includes two electrode active material layers 20, two solid electrolyte layers 30, and two counter electrode active material layers 40, and electrode active material layers 20, solid electrolyte layers 30, and counter electrode active material layers 40 are disposed on both sides of electrode current collector 10 in the stacking direction. FIG. 16 illustrates electrode active material layer 20, solid electrolyte layer 30, and counter electrode active material layer 40 that are disposed on one side (the positive side of the z-axis) of electrode current collector 10 in the stacking direction.

Battery 501 can be manufactured by proceeding with the manufacturing process of battery 501 using such stacked electrode plate 90, and by fragmenting stacked electrode plate 90 into the shape of one battery 501 at any stage until battery 501 is completed. This can improve manufacturing efficiency. For example, stacked electrode plate 90 is fragmented by cutting it in the y-axis direction at least in the center of stacked electrode plate 90 of the x-axis direction. In addition, this fragmentation may be performed by cutting in step S19, which will be described later. In addition, after stacked electrode plate 90 is fragmented, polishing or the like may be performed to adjust the size.

Next, electrode current collector 410 is formed by forming protrusion 411 on electrode current collector 10 (step S16). The formation of protrusion 411 is performed by, for example, a removal process in which part of first region 71 is removed. The removal process employs cutting tools such as cutters, slitters, cutting machines, and die-cutting machines incorporating Thomson blades, as well as means such as lasers or jets, but the present disclosure is not limited to these methods. In addition, foil or the like having the shape of separately prepared protrusion 411 may be bonded to electrode current collector 10. Means such as ultrasonic welding, resistance welding, and crimping are used for this bonding, but the present disclosure is not limited to these methods. It should be noted that protrusion 411 may be formed at any stage of manufacturing battery 501. In addition, in step S11, electrode current collector 410 with protrusion 411 formed in advance may be prepared.

Next, in the x-axis positive side direction, insulating layer 80 is formed so as to cover part of first region 71 on the second region 72 side, the entire region of second region 72, and part of third region 73 on the second region 72 side (step S17). This provides a stacked electrode plate in which insulating layer 80 is further formed. Insulating layer 80 is disposed, for example, by coating a fluid resin material and curing it. The coating is performed by inkjet or screen printing, or by dipping the end surface of the stacked electrode plate into a resin material. The curing is performed by drying, heating, or light irradiation depending on the resin material used. In addition, when forming insulating layer 80, to prevent entire first region 71 on main surfaces 11 and 12 of electrode current collector 10 from being insulated, a protective treatment such as masking with tape or resist processing may be performed on a portion of first region 71. After insulating layer 80 is formed, the above-described member used for protection is removed, and thus the electrical connection in first region 71 can be ensured. In addition, insulating layer 80 may be formed by adhering an insulating tape or the like as insulating layer 80, but the present disclosure is not limited to these methods. It should be noted that when a battery including insulating layer 80a such as battery 501a is manufactured, insulating layer 80a is further formed so as to cover entire third region 73 and part of fourth region 74 on the third region 73 side. In addition, when manufacturing battery 501b, insulating layer 80b is formed so as to further cover the end surface of electrode current collector 410 in addition to the region covered with insulating layer 80.

Next, counter electrode current collector 450 is stacked on the side of counter electrode active material layer 40 opposite from solid electrolyte layer 30 (step S18). This provides a stacked body (unit cell 560) in which electrode active material layer 20, solid electrolyte layer 30, counter electrode active material layer 40, and counter electrode current collector 450 are stacked in this order on both main surfaces 11 and 12 of electrode current collector 410. At this time, counter electrode current collector 450 is stacked on counter electrode active material layer 40 so that fourth region 74 not covered with counter electrode current collector 450 is provided at the end portion of counter electrode active material layer 40 in the x-axis positive side direction. In addition, at this time, counter electrode active material layer 40 and counter electrode current collector 450 are bonded by, for example, a high-pressure pressing treatment. In addition, the bonding may be performed by using counter electrode current collector 450 having a connecting layer containing an adhesive binder, coating an adhesive agent, or stacking an adhesive film. The method of bonding is not limited to these methods. In addition, a heat treatment may be performed during or after the bonding.

Counter electrode current collector 450 formed in advance to achieve the desired size before stacking may be used, or counter electrode current collector 450 may be partially removed after stacking. In addition, protrusion 451 may be formed after the stacking.

Next, unit cell 560 obtained in step S18 is cut along the direction intersecting main surface 11, and a cut surface is formed as side surfaces 62, 63 and 64 at the end portions of unit cell 560 in the x-axis negative side direction, y-axis positive side direction, and y-axis negative side direction (step S19). This cutting creates three sides of unit cell 560 that constitute the end portions in the x-axis negative side direction, the y-axis positive side direction, and the y-axis negative side direction, which are different from the end portions where first region 71, second region 72, third region 73, and fourth region 74 are provided, in a plan view. Cutting is performed by using cutting tools such as a cutter, an ultrasonic cutter, a slitter, a dicer, a cutting machine, cutting machines, and die-cutting machines incorporating Thomson blades, as well as means such as lasers or jets, but the present disclosure is not limited to these methods. In addition, in order to prevent short circuits, side surfaces 62, 63, and 64 may be polished after cutting to remove burrs and the like.

In step S19, electrode current collector 410, electrode active material layer 20, solid electrolyte layer 30, counter electrode active material layer 40, and counter electrode current collector 450 are cut collectively in the direction intersecting main surface 11. The direction intersecting main surface 11 is specifically a direction perpendicular to main surface 11, and can be said to be a stacking direction of unit cells 560. This makes it possible to easily manufacture battery 501 because it is not necessary to stack electrode current collector 410, electrode active material layer 20, solid electrolyte layer 30, counter electrode active material layer 40 and counter electrode current collector 450 in the shape after cutting. In addition, the regions in which first region 71, second region 72, third region 73 and fourth region 74 are provided remain uncut, and terminals can be formed in a structure that can suppress the occurrence of short circuits. For that reason, highly reliable battery 501 can be easily manufactured. In addition, since the capacity of unit cell 560 can be adjusted at the position where unit cell 560 is to be cut, the capacity accuracy can be improved.

On the cut surface, the side surfaces of electrode current collector 410, electrode active material layer 20, solid electrolyte layer 30, counter electrode active material layer 40, and counter electrode current collector 450 are exposed. It should be noted that after cutting, in order to protect these exposed side surfaces, a sealing member or the like may be disposed to cover these side surfaces. That is, when these side surfaces are covered with other members such as sealing members, these exposed side surfaces may be covered with other members.

Through the steps described above, battery 501 composed of one unit cell 560 is obtained. Obtained battery 501 may be housed in an exterior body or the like. When battery 501 is housed in the exterior body, protrusions 411 and 451 are drawn out to the exterior body. In addition, in obtained battery 501, a process may be performed to remove the corners (intersections of the side surfaces) in a plan view by cutting or the like. At this time, when the corner in the x-axis positive side direction is to be removed, for example, the portion including first region 71, second region 72, third region 73, and fourth region 74 is removed. This removes corners that are prone to collapse and breakage, and can further improve reliability of battery 501.

It should be noted that the order of steps S18 and S19 may be changed. In this case, first, after step S17, in step S19, the stacked body (stacked electrode plate) in which electrode current collector 410, electrode active material layer 20, solid electrolyte layer 30, and counter electrode active material layer 40 are stacked is cut in the direction intersecting main surface 11, and a cut surface is formed at the end portions of the stacked electrode plate in the x-axis negative side direction, the y-axis positive side direction, and the y-axis negative side direction. At this time, electrode current collector 410, electrode active material layer 20, solid electrolyte layer 30, and counter electrode active material layer 40 are cut collectively in the direction intersecting main surface 11. This makes it possible to easily manufacture battery 501 because there is no need to stack electrode current collector 410, electrode active material layer 20, solid electrolyte layer 30, and counter electrode active material layer 40 in the shape after cutting. Thereafter, in step S18, counter electrode current collector 450 having a shape according to the shape of the stacked electrode plate after the cut surface is formed is stacked on the side of counter electrode active material layer 40 opposite from solid electrolyte layer 30. This provides battery 501 composed of one unit cell 560.

### [Embodiment 2]

Next, Embodiment 2 will be described. In Embodiment 2, a stacked battery in which a plurality of unit cells are stacked will be described. It should be noted that in the following description, differences from Embodiment 1 and respective Variations mentioned above will be mainly described, and descriptions of commonalities will be omitted or simplified as appropriate.

### [1. Configuration]

First, the configuration of the battery according to Embodiment 2 will be described with reference to the drawings. FIG. 17 is a cross-sectional view of battery 601 according to the present embodiment. As illustrated in FIG. 17, battery 601 includes a plurality of unit cells 560 according to Variation 5 of Embodiment 1, and has a structure in which a plurality of unit cells 560 are stacked. Since unit cells 560 described above are stacked in battery 601, a highly reliable battery 601 can be realized.

The plurality of unit cells 560 have the same structure and are stacked so as to be electrically connected in parallel. Electrode active material layers 20, solid electrolyte layer 30, and the counter electrode active material layers 40 stacked on main surfaces on both sides of each current collector are in the same order as each other in the stacking order from the current collector. In addition, the plurality of unit cells 560 are stacked so that the positions of the side surfaces of unit cells 560 coincide when viewed from the stacking direction. For that reason, the side surface of each of unit cells 560 in the x-axis negative side direction, y-axis positive side direction, and y-axis negative side direction are flush. In addition, in the plurality of unit cells 560, protrusion 451 and protrusion 411 (not shown) protrude in the same direction, specifically in the x-axis positive side direction. Protrusions 451 of the plurality of unit cells 560 and protrusions 411 of the plurality of unit cells 560 may be bundled and bonded together by welding or the like.

In the example illustrated in FIG. 17, the number of unit cells 560 to be stacked is four, but may be two or three, or five or more.

In the example illustrated in FIG. 17, two adjacent unit cells 560 share counter electrode current collector 450. It should be noted that two adjacent unit cells 560 may have such an arrangement that two adjacent unit cells 560 do not share counter electrode current collector 450, but the two adjacent unit cells 560 each have individual counter electrode current collectors 450, and two counter electrode current collectors 450 overlap between counter electrode active material layers 40. At this time, a conductive adhesive layer may be provided between the two counter electrode current collectors 450.

It should be noted that in the stacked battery according to the present embodiment, instead of unit cell 560, the unit cells described above according to Embodiment 1 and each Variation other than unit cell 560 may be used as the unit cell to be stacked. Even if unit cells other than unit cells 560 are stacked, adjacent unit cells may share a current collector, or the unit cells may be stacked with two separate current collectors overlapping each other without sharing current collectors. In addition, when unit cells such as unit cells 60, in which electrode active material layer 20, solid electrolyte layer 30, counter electrode active material layer 40, and counter electrode current collector 50 or 450 are stacked on only one main surface 11 of electrode current collector 10 or 410, are stacked, the unit cells may be stacked so as to be electrically connected in series. In addition, the plurality of unit cells may include unit cells having different configurations. In addition, the plurality of unit cells may include unit cells having a different configuration from the unit cells according to Embodiment 1 and respective Variations. For example, the plurality of unit cells in this case may include unit cells in which the side surfaces of electrode current collector 10, electrode active material layer 20, solid electrolyte layer 30, counter electrode active material layer 40, and counter electrode current collector 50 are flush with each other on all side surfaces.

An example of a battery in which unit cells other than unit cells 560 are stacked will be described with reference to FIG. 18. FIG. 18 is a cross-sectional view of another battery 601a according to the present embodiment. In FIG. 18, battery 601a is illustrated in which a plurality of unit cells 560a are stacked.

As illustrated in FIG. 18, battery 601a has a configuration in which a plurality of unit cells 560 of battery 601 is replaced with a plurality of unit cells 560a. In addition, in battery 601a, when a plurality of unit cells 560a are stacked and joined together using a press or similar method, protrusion 451 and insulating layer 80a are rolled together in the portion where protrusion 451 of counter electrode collector 450 and insulating layer 80a overlap in a plan view, and the gap between counter electrode collector 450 and insulating layer 80a, as provided in the example illustrated in FIG. 11, is filled with insulating layer 80a. It should be noted that at the bottom and top of battery 601a, protrusion 451 as illustrated in FIG. 11 may have a structure in which protrusion 451 rises over insulating layer 80a.

### [2. Manufacturing method]

Next, a manufacturing method of the battery according to the present embodiment will be described. The following description will focus on a manufacturing method of battery 601 in which a plurality of unit cells 560 are stacked, but batteries in which the unit cells according to Embodiment 1 and respective Variations described above other than unit cell 560 are stacked can also be manufactured by appropriately applying the following manufacturing method. FIG. 19 is a flow chart illustrating a manufacturing method of battery 601 according to Embodiment 2. It should be noted that the manufacturing method of battery 601 described below is an example, and the manufacturing method of battery 601 is not limited to the following example.

First, in steps S21 to S27 illustrated in FIG. 19, the same number of stacked electrode plates as the number of unit cells 560 included in battery 601 is formed by the same method as the steps S11 to S17 described with reference to FIG. 15. The stacked electrode plate may be large stacked electrode plate 90 as illustrated in FIG. 16 with insulating layer 80 formed thereon, or may be a stacked electrode plate corresponding to the size of unit cell 560. It should be noted that steps S21 to S27 may be omitted, and the same number of the stacked electrode plates as the number of unit cells 560 provided in the pre-formed battery 601 may be prepared.

Next, counter electrode current collector 450 is stacked on the side of counter electrode active material layer 40 opposite from solid electrolyte layer 30 and a plurality of unit cells 560 are stacked (steps S28 and S29). For example, the plurality of stacked electrode plates obtained up to step S27 and the plurality of counter electrode current collectors 450 are stacked so that counter electrode current collector 450 is stacked on the side of counter electrode active material layer 40 opposite from solid electrolyte layer 30. The stacked electrode plate only includes electrode current collector 410 as the current collector, so that it does not include counter electrode current collector 450. Therefore, when stacking a plurality of stacked electrode plates and a plurality of counter electrode current collectors 450, it is possible to share one counter electrode current collector 450 with adjacent unit cell 560 without overlapping counter electrode current collector 450.

In the manufacture of battery 601, counter electrode current collector 450 and the stacked electrode plate obtained up to step S27 are alternately stacked, so that counter electrode current collector 450 is shared by adjacent unit cells 560, and counter electrode current collector 450 is stacked on counter electrode active material layer 40 and the plurality of unit cells 560 are stacked. Alternatively, a unit cell may be formed by stacking counter electrode current collector 450 only on one of two counter electrode active material layers 40 of the stacked electrode plate, thereby removing one counter electrode current collector 450 from unit cell 560, and such unit cells may be stacked. By stacking the unit cells with counter electrode current collector 450 sandwiched between counter electrode active material layers 40, counter electrode current collector 450 is also shared by adjacent unit cells 560. In this case, after stacking as many unit cells as necessary, counter electrode current collector 450 is stacked onto counter electrode active material layer 40, which lacks counter electrode current collector 450 because it is the end layer in the stacking direction.

When stacking these layers, counter electrode active material layer 40 and counter electrode current collector 450 may be bonded by a high-pressure pressing treatment or the like, similar to step S18. This bonding may be performed at a stage during the stacking of counter electrode current collectors 450 and the stacked electrode plates, or may be performed collectively after all of counter electrode current collectors 450 and the stacked electrode plates have been stacked. When the bonding is performed collectively, for example, all of the plurality of counter electrode current collectors 450 and the plurality of stacked electrode plates are stacked, and after stacking, they are pressed collectively. This makes it possible to reduce the number of handling, preventing foreign objects from being caught in the stacking of the plurality of stacked electrode plates and the plurality of counter electrode current collectors 450, and a highly reliable battery can be manufactured.

In addition, similar to step S18, for counter electrode current collector 450, one that has been pre-formed to the desired dimensions prior to stacking may be used, or a portion thereof may be removed after stacking. In addition, protrusion 451 may be formed after the stacking.

It should be noted that when two adjacent unit cells 560 do not share counter electrode current collector 450, and two counter electrode current collector 450 are overlapped and disposed between counter electrode active material layers 40, the same process as in step S18 is performed in step S28 to obtain a stacked body (unit cell 560) in which electrode active material layer 20, solid electrolyte layer 30, counter electrode active material layer 40, and counter electrode current collector 450 are stacked in this order on both main surfaces 11 and 12 of electrode current collector 410. Then, in step S29, obtained unit cells 560 are stacked. At this time, the bonding of unit cells 560 is performed by a conductive adhesive layer formed by coating an adhesive or by stacking an adhesive film. However, the bonding method is not limited to these methods. In addition, heat treatment and pressing may be performed after bonding. For example, by stacking unit cells 560, all of the plurality of counter electrode current collectors 450 and the plurality of stacked electrode plates may be stacked, and after stacking, they may be pressed collectively.

Next, the stacked body of the plurality of unit cells 560 obtained in step S29 is cut along the direction intersecting main surface 11, and a cut surface is formed as side surfaces 62, 63 and 64 at the respective end portions of the plurality of unit cells 560 in the x-axis negative side direction, y-axis positive side direction, and y-axis negative side direction (step S30). This cutting creates three sides of the plurality of unit cells 560 that constitute the end portions, which are different from the end portions where first region 71, second region 72, third region 73, and fourth region 74 are provided, in a plan view. The cutting method can be performed in the same manner as in step S19 described above. In step S30, all the plurality of unit cells 560 are cut collectively in the direction intersecting main surface 11. This makes it possible to easily manufacture battery 601 because it is not necessary to stack electrode current collector 410, electrode active material layer 20, solid electrolyte layer 30, counter electrode active material layer 40 and counter electrode current collector 450 of each of the plurality of unit cells 560 in the shape after cutting. In addition, the regions in which first region 71, second region 72, third region 73 and fourth region 74 are provided remain uncut, and terminals can be formed in a structure that can suppress the occurrence of short circuits. For that reason, highly reliable battery 601 can be easily manufactured.

On the cut surface, the side surfaces of electrode current collector 410, electrode active material layer 20, solid electrolyte layer 30, counter electrode active material layer 40, and counter electrode current collector 450 of each of the plurality of unit cells 560 are exposed. It should be noted that after cutting, in order to protect these exposed side surfaces, a sealing member or the like may be disposed to cover these side surfaces. That is, when these side surfaces are covered with other members such as sealing members, these exposed side surfaces may be covered with other members.

Through the steps as described above, battery 601 having a structure in which a plurality of unit cells 560 are stacked is obtained. Obtained battery 601 may be housed in an exterior body or the like. When battery 601 is housed in the exterior body, protrusions 411 and 451 are drawn out to the exterior body. In addition, in obtained battery 601, a process may be performed to remove the corners (intersections of the side surfaces) in a plan view by cutting or the like.

It should be noted that the formation of the cut surface in step S30 may be performed before step S29. In this case, in step S29, the unit cells on which the cut surfaces are formed are stacked to obtain battery 601.

In addition, the stacked electrode plate and counter electrode current collector 450 stacked in steps S28 and S29 are not limited to a configuration that corresponds to a plurality of unit cells 560, and may be the stacked electrode plate and counter electrode current collector having a configuration that corresponds to the battery to be manufactured. For example, the stacked electrode plate and counter electrode current collector used in steps S28 and S29 may have a configuration corresponding to the unit cells according to Embodiment 1 and respective Variations described above other than unit cells 560. In addition, for example, the plurality of stacked electrode plates used in steps S28 and S29 may include stacked electrode plates in which the side surfaces of electrode current collector 10, electrode active material layer 20, solid electrolyte layer 30, and counter electrode active material layer 40 are flush with each other on all side surfaces.

### (Other embodiments)

The batteries according to the present disclosure have been described above based on the embodiments, but the present disclosure is not limited to these embodiments. Forms obtained by applying various modifications to the embodiments conceived by a person skilled in the art or forms realized by combining some components in the embodiments without departing from the spirit of the present disclosure are also included within the scope of this disclosure.

In the embodiments described above, the battery includes an electrode current collector, an electrode active material layer, a solid electrolyte layer, a counter electrode active material layer, and a counter electrode current collector, or an electrode current collector, an electrode active material layer, a solid electrolyte layer, a counter electrode active material layer, a counter electrode current collector and an insulating layer, but the present disclosure is not limited thereto. For example, bonding layers and the like for the purpose of the reduction in electrical resistance, the improvement of bonding strength, and the like may be provided between the layers of the battery within the range where the battery characteristics are acceptable.

In addition, in the embodiments describe above, the unit cell is formed by sequentially stacking the electrode active material layer, solid electrolyte layer, and counter electrode active material layer directly from the main surface side of the electrode current collector, but the present disclosure is not limited thereto. For example, the unit cell may be formed by sequentially stacking an electrode active material layer, a solid electrolyte layer, and a counter electrode active material layer onto a sheet-like substrate, and the electrode active material layer, solid electrolyte layer, and counter electrode active material layer that have been formed may be removed from the substrate and stacked onto the main surface of the electrode current collector. In addition, an electrode active material layer, a solid electrolyte layer and a counter electrode active material layer may be formed on a sheet-like substrate, and stacking may be performed by sequentially transferring the electrode active material layer, the solid electrolyte layer, and the counter electrode active material layer that have been formed onto the main surface of the electrode current collector.

In addition, in the embodiments described above, the unit cell is provided with a first region, a second region, a third region, and a fourth region, but this is not limited thereto. For example, the counter electrode active material layer may be completely covered with the counter electrode current collector, and the fourth region may not be provided.

In addition, various changes, replacements, additions, omissions, and the like can be made to the respective embodiments described above within the scope of the claims or the equivalents thereof.

### [Industrial Applicability]

The battery according to the present disclosure can be used, for example, as a secondary battery such as an all-solid-state battery used in various electronic devices, electrical appliances, automobiles or the like.

### [Reference Signs List]

1, 101, 201, 201a, 301, 301a, 401, 401a, 501, 501a, 501b, 601, 601a Battery
10, 410 Electrode current collector
11, 12 Main surface
20 Electrode active material layer
21, 31, 41 Inclined surface
22, 32 Recess
30 Solid electrolyte layer
40 Counter electrode active material layer
50, 450 Counter electrode current collector
60, 160, 260, 260a, 360, 360a, 460, 460a, 560, 560a, 560b
Unit cell
61, 62, 63, 64 Side surface
71 First region
72 Second region
73 Third region
74 Fourth region
80, 80a, 80b Insulating layer
90 Stacked electrode plate
411, 451 Protrusion

## Claims

1. A battery comprising:
a unit cell including:
an electrode current collector;
an electrode active material layer disposed on a main surface of the electrode current collector;
an electrolyte layer disposed on a side of the electrode active material layer opposite from the electrode current collector;
a counter electrode active material layer disposed on a side of the electrolyte layer opposite from the electrode active material layer; and
a counter electrode current collector disposed on a side of the counter electrode active material layer opposite from the electrolyte layer,
wherein a first region not covered with the electrode active material layer is provided at an end portion of the main surface of the electrode current collector in a first direction that is a direction from a center of the main surface towards an outer edge of the main surface of the electrode current collector,
a second region not covered with the electrolyte layer in a plan view of the main surface of the electrode current collector is provided at an end portion of the electrode active material layer in the first direction, and
a third region not covered with the counter electrode active material layer in the plan view is provided at an end portion of the electrolyte layer in the first direction.

2. The battery according to claim 1,
wherein the unit cell includes two electrode active material layers, two electrolyte layers, two counter electrode active material layers, and two counter electrode current collectors, the two electrode active material layers each being the electrode active material layer, the two electrolyte layers each being the electrolyte layer, the two counter electrode active material layers each being the counter electrode active material layer, the two counter electrode current collectors each being the counter electrode current collector,
the two electrode active material layers are disposed on two main surfaces of the electrode current collector, the two main surfaces including the main surface,
the two electrolyte layers are disposed on sides of the two electrode active material layers opposite from the electrode current collector,
the two counter electrode active material layers are disposed on sides of the two electrolyte layers opposite from the two electrode active material layers,
the two counter electrode current collectors are disposed on sides of the two counter electrode active material layers opposite from the two electrolyte layers,
the first region is provided at an end portion of each of the two main surfaces of the electrode current collector in the first direction,
the second region is provided at an end portion of each of the two electrode active material layers in the first direction, and
the third region is provided at an end portion of each of the two electrolyte layers in the first direction.

3. The battery according to claim 1,
wherein a fourth region not covered with the counter electrode current collector in the plan view is provided at an end portion of the counter electrode active material layer in the first direction.

4. The battery according to claim 3,
wherein the unit cell includes two electrode active material layers, two electrolyte layers, two counter electrode active material layers, and two counter electrode current collectors, the two electrode active material layers each being the electrode active material layer, the two electrolyte layers each being the electrolyte layer, the two counter electrode active material layers each being the counter electrode active material layer, the two counter electrode current collectors each being the counter electrode current collector,
the two electrode active material layers are disposed on two main surfaces of the electrode current collector, the two main surfaces including the main surface,
the two electrolyte layers are disposed on sides of the two electrode active material layers opposite from the electrode current collector,
the two counter electrode active material layers are disposed on sides of the two electrolyte layers opposite from the two electrode active material layers,
the two counter electrode current collectors are disposed on sides of the two counter electrode active material layers opposite from the two electrolyte layers,
the first region is provided at an end portion of each of the two main surfaces of the electrode current collector in the first direction,
the second region is provided at an end portion of each of the two electrode active material layers in the first direction,
the third region is provided at an end portion of each of the two electrolyte layers in the first direction, and
the fourth region is provided at an end portion of each of the two counter electrode active material layers in the first direction.

5. The battery according to claim 1,
wherein the electrode active material layer includes an inclined surface in the second region, the inclined surface being inclined to approach the electrode current collector as the electrode active material layer extends in the first direction, and
the electrolyte layer includes an inclined surface in the third region, the inclined surface being inclined to approach the electrode current collector as the electrolyte layer extends in the first direction.

6. The battery according to claim 3,
wherein the electrode active material layer includes an inclined surface in the second region, the inclined surface being inclined to approach the electrode current collector as the electrode active material layer extends in the first direction,
the electrolyte layer includes an inclined surface in the third region, the inclined surface being inclined to approach the electrode current collector as the electrolyte layer extends in the first direction, and
the counter electrode active material layer includes an inclined surface in the fourth region, the inclined surface being inclined to approach the electrode current collector as the counter electrode active material layer extends in the first direction.

7. The battery according to any one of claims 1 to 6,
wherein the electrode active material layer includes a recess in which the electrolyte layer in the third region is embedded.

8. The battery according to any one of claims 3, 4, and 6,
wherein the electrode active material layer includes a recess in which the electrolyte layer in the third region is embedded, and
the electrolyte layer includes a recess in which the counter electrode active material layer in the fourth region is embedded.

9. The battery according to claim 1,
wherein the unit cell further includes an insulating layer that covers at least part of the first region, at least part of the second region, and at least part of the third region.

10. The battery according to claim 3,
wherein the unit cell further includes an insulating layer that covers at least part of the first region, at least part of the second region, and at least part of the third region.

11. The battery according to claim 10,
wherein the insulating layer further covers at least part of the fourth region.

12. The battery according to any one of claims 9 to 11,
wherein part of the end portion of the counter electrode current collector in the first direction protrudes in the first direction relative to the insulating layer in the plan view.

13. The battery according to claim 12,
wherein side surfaces of the electrode current collector, the electrode active material layer, the electrolyte layer, and the counter electrode active material layer are flush with each other at an end portion of the unit cell in a second direction that is a direction from the center towards the outer edge of the main surface of the electrode current collector, the second direction being different from the first direction.

14. The battery according to claim 12,
wherein side surfaces of the electrode current collector, the electrode active material layer, the electrolyte layer, the counter electrode active material layer, and the counter electrode current collector are flush with each other at an end portion of the unit cell in a second direction that is a direction from the center towards the outer edge of the main surface of the electrode current collector, the second direction being different from the first direction.

15. The battery according to claim 12, comprising:
a plurality of unit cells, each of the plurality of unit cells being the unit cell,
wherein the plurality of unit cells are stacked.

16. A battery manufacturing method comprising:
stacking a plurality of counter electrode current collectors and a plurality of stacked electrode plates including an electrode current collector, an electrode active material layer, an electrolyte layer, and a counter electrode active material layer, to cause the plurality of counter electrode current collectors to be stacked on a side of the counter electrode active material layer opposite from the electrolyte layer, the electrode active material layer being disposed on a main surface of the electrode current collector, the electrolyte layer being disposed on a side of the electrode active material layer opposite from the electrode current collector, the counter electrode active material layer being disposed on a side of the electrolyte layer opposite from the electrode active material layer; and
pressing the plurality of stacked electrode plates and the plurality of counter electrode current collectors collectively after the stacking.

17. The battery manufacturing method according to claim 16,
wherein at least one of the plurality of stacked electrode plates includes only the electrode current collector as a current collector.

18. The battery manufacturing method according to claim 16 or 17,
wherein the unit cell includes two electrode active material layers, two electrolyte layers, and two counter electrode active material layers, the two electrode active material layers each being the electrode active material layer, the two electrolyte layers each being the electrolyte layer, the two counter electrolyte layers each being the counter electrolyte layer,
the two electrode active material layers are disposed on two main surfaces of the electrode current collector, the two main surfaces including the main surface,
the two electrolyte layers are disposed on sides of the two electrode active material layers opposite from the electrode current collector, and
the two counter electrolyte layers are disposed on sides of the two electrolyte layers opposite from the two electrode active material layers.

19. The battery manufacturing method according to claim 16 or 17,
wherein a first region not covered with the electrode active material layer is provided at an end portion of the main surface of the electrode current collector in a first direction that is a direction from a center of the main surface towards an outer edge of the main surface of the electrode current collector,
a second region not covered with the electrolyte layer in a plan view of the main surface of the electrode current collector is provided at an end portion of the electrode active material layer in the first direction, and
a third region not covered with the counter electrode active material layer in the plan view is provided at an end portion of the electrolyte layer in the first direction.

20. The battery manufacturing method according to claim 19,
wherein the counter electrode current collector includes a protrusion that is part of an end portion in the first direction protruding in the first direction.
